(19) Europäisches Patentamt
European Patent Office
Office européen des brevets

(11) **EP 4 517 653 A1**

(12) **EUROPEAN PATENT APPLICATION**

(43) Date of publication:
05.03.2025 Bulletin 2025/10

(21) Application number: 24195952.7

(22) Date of filing: 22.08.2024

(51) International Patent Classification (IPC):
*G06T 5/60* (2024.01)    *G06T 5/70* (2024.01)

(52) Cooperative Patent Classification (CPC):
**G06T 5/60; G06T 5/70;** G06T 2207/20081;
G06T 2207/20084

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 28.08.2023 JP 2023138340

(71) Applicant: CANON KABUSHIKI KAISHA
Tokyo 146-8501 (JP)

(72) Inventors:
• SAITO, Sho
Tokyo, 146-8501 (JP)
• MATSUSHITA, Masahiro
Tokyo, 146-8501 (JP)
• MUTA, Hajime
Tokyo, 146-8501 (JP)
• YOSHIMURA, Shozo
Tokyo, 146-8501 (JP)
• FUKAMACHI, Hitoshi
Tokyo, 146-8501 (JP)

(74) Representative: Canon Europe Limited
European Intellectual Property Group
4 Roundwood Avenue
Stockley Park
Uxbridge UB11 1AF (GB)

(54) **INFORMATION PROCESSING APPARATUS, METHOD, AND PROGRAM**

(57) An information processing apparatus includes setting means (121, 901) for setting up, in an input image, an inference target region subjected to an inference by a model established based on machine learning, and decision means (113, 903) for deciding, according to a size of the inference target region set by the setting means, a model to be applied to an inference in which the input image is set as input data from among a plurality of models which have mutually different sizes of input data and on which an initialization for initiating a state in which the inference is executable on the input data is implemented.

FIG. 2

EP 4 517 653 A1

# EP 4 517 653 A1

**Description**

BACKGROUND OF THE INVENTION

Field of the Invention

The present disclosure relates to an information processing apparatus, a method, and a program.

Description of the Related Art

In recent years, a learning model (hereinafter, which may also be simply referred to as a model) established based on machine learning is applied to various image processing and image recognition application programs. Examples of the image processing using the model include noise reduction processing of reducing (or eventually removing) an influence from a degradation such as noise which becomes apparent on a target image. In addition, examples of the image recognition using the model include object detection processing of detecting a desired object captured as an object in an image.

Some of the above-mentioned models may have different sizes of image data which can be accepted as an input. Against such a background, Japanese Patent Laid-Open Publication No. 2021-71757 proposes a technique of changing a size of target image data into a size of image data which can be accepted as an input by an object detection model and then inputting the target image data to the model.

On the other hand, in a state in which the size of the image data serving as an input is changed as in the technique disclosed in Japanese Patent Laid-Open Publication No. 2021-71757, a feature of an image (for example, a feature of noise which becomes apparent on the image) may change, and an accuracy (for example, a noise reduction accuracy) of image processing using the model may decrease.

A method of adopting a model which can accept the target image data as an input to address such an issue is also conceivable. However, an initialization for initiating an inference executable state may take time for the model to be able to execute an inference (for example, the image processing such as noise reduction) on the image data, and a state may be assumed in which the time related to the initialization becomes apparent as waiting time.

SUMMARY OF THE INVENTION

The present invention in its first aspect provides an information processing apparatus as specified in claim 1. Optional features are specified in claims 2 to 13.

The present invention in its second aspect provides a method as specified in claim 14. Optional features of the second aspect are specified in or derivable from claims 2 to 13.

The present invention in its third aspect provides a program as specified in claim 15. That is to say a computer program or a computer program product is specified by claim 15. Optional features of the third aspect are specified in or derivable from claims 2 to 13.

Further features of the present invention will become apparent from the following description of embodiments with reference to the attached drawings.

BRIEF DESCRIPTION OF THE DRAWINGS

Fig. 1 illustrates an example of a system configuration of an image processing system.
Fig. 2 illustrates an example of a functional configuration of the image processing system.
Figs. 3A and 3B illustrate an example of a flow of processing of the image processing system.
Fig. 4 illustrates an example of a structure of a model.
Fig. 5 illustrates an example of degradation appending processing for an image.
Fig. 6 illustrates an overview of inference processing in which an image is set as an input.
Fig. 7 illustrates an example of a model decision method.
Figs. 8A to 8C are flowcharts illustrating an example of the processing of the image processing system.
Fig. 9 illustrates an example of a functional configuration of the image processing system.
Fig. 10 illustrates an example of a setting screen of the image processing system.
Figs. 11A and 11B illustrate an example of processing related to ROI automatic setup.
Fig. 12 is a flowchart illustrating an example of the processing of the image processing system.
Fig. 13 illustrates an example of a network structure of the model.

Fig. 14 illustrates an example of the setting screen of the image processing system.

Fig. 15 is a flowchart illustrating an example of the processing of the image processing system.

Figs. 16A and 16B illustrate an example of the processing related to the ROI automatic setup.

Fig. 17 illustrates an example of the setting screen of the image processing system.

Figs. 18A and 18B are flowcharts illustrating an example of the processing of the image processing system.

Figs. 19A and 19B illustrate an example of the setting screen of the image processing system.

Fig. 20 is a flowchart illustrating an example of the processing of the image processing system.

DESCRIPTION OF THE EMBODIMENTS

Hereinafter, with reference to the attached drawings, embodiments of the present disclosure will be described in detail.

It is noted that in the present specification and drawings, a component having substantially the same functional configuration is denoted by the same reference sign, and a repeated explanation will be omitted.

Regarding CNN

First, a description will be provided of an overview of a convolutional neural network (CNN) used in a general information processing technique to which deep learning is applied, including an information processing apparatus according to each of embodiments of the present disclosure. The CNN is a technique of repeatedly implementing a non-linear operation after a filter generated by learning (training or learning) is convolved with image data. Data obtained by implementing the non-linear operation after the filter is convolved with the image data is also referred to as a feature map. In addition, the learning is performed using learning data (training images or data sets) formed of a pair of input image data and output image data. In simple terms, the learning is generation, from the learning data, of a value of the filter with which the input image data can be highly accurately converted to the corresponding output image data.

When the image data has RGB color channels or the feature map is configured by a plurality of sheets of image data, the filter used for the convolution also has a plurality of channels corresponding to those. Processing of performing the non-linear operation after the filter is convolved with the image data (or the feature map) is represented by a unit called layer. For this reason, when feature maps and filters corresponding to the respective layers are to be explicitly respectively indicated, for example, representations such as the feature map of the n-th layer and the filter of the n-th layer are used. In addition, for example, the CNN in which the convolution of the filter and the non-linear operation are repeated three times has a network structure of three layers. The above-described non-linear operation processing can be formulated as in a relational expression illustrated in Expression 1 below.

$$X_n^{(l)} = f\left(\sum_{n=1}^{N} W_n^{(l)} * X_{n-1}^{(l)} + b_n^{(l)}\right)$$

$$\cdots(1)$$

In Expression 1, $W_n$ denotes a filter of the n-th layer, $b_n$ denotes a bias of the n-th layer, f denotes a non-linear operator, $X_n$ denotes a feature map of the n-th layer, and * denotes a convolution operator. In addition, (1) appended as a superscript to each operator represents the first filter or feature map. The above-described filter and bias are generated by learning, and these are also collectively referred to as "network parameters". As the non-linear operation, for example, a sigmoid function or a rectified linear unit (ReLU) is used. For example, the ReLU is represented by a conditional expression illustrated as Expression 2 below.

$$f(X) = \begin{cases} X \text{ if } 0 \leq X \\ 0 \text{ otherwise} \end{cases}$$

$$\cdots(2)$$

As indicated by Expression 2, a negative element among elements of an input vector X is applied with 0, and an element equal to or higher than 0 is applied with a raw value.

As a network using the CNN, ResNet in an image recognition field and RED-Net in a super resolution field as an application of ResNet have been widely used. According to either of the techniques, an increase in accuracy of the processing is aimed by creating multiple layers in the CNN and performing the convolution of the filter multiple times. For example, ResNet is characterized in a network structure provided with a route shortcutting the convolution layer, thereby achieving a multilayer network as many as 152 layers and achieving a highly accurate recognition approaching a human recognition rate. It is noted that a reason why the increase in accuracy of the processing is realized by the multilayer CNN is that, in simple terms, a non-linear relationship between the input and the output can be repressed by repeating the non-linear operation multiple times.

CNN learning

Next, CNN learning will be described. The CNN learning is generally performed by minimizing an objective function illustrated in Expression 3 below for learning data formed of a set of input image data and corresponding correct answer output image (training image) data.

$$L(\theta) = \frac{1}{n} \sum_{i=1}^{n} \|F(X_i; \theta) - Y_i\|_2^2$$

$$\cdots (3)$$

In Expression 3, L denotes a loss function for measuring an error between a correct answer and an estimation result. $Y_i$ denotes the i-th correct answer output image data, and $X_i$ denotes the i-th input image data. F denotes a function in which operations (Expression 1) performed in the respective layers of the CNN are collectively represented, $\theta$ denotes network parameters (a filter and a bias), $\|Z\|_2$ denotes an L2 norm that is, in simple terms, a square root of a sum of squares of an element of a vector Z, and n denotes the number of data sets of the learning data. In general, since the number of pieces of learning data is high, in a stochastic gradient descent (SGD), some of the learning data is randomly selected to be used for the learning. In addition, as a minimization (optimization) method for the objective function, various methods such as a momentum method, an AdaGrad method, an AdaDelta method, and an Adam method have been proposed. The Adam method is provided by a relational expression as illustrated in Expression 4 below.

$$g = \frac{\partial L}{\partial \theta_i^t}$$

$$m_t = \beta_1 m_{t-1} + (1 - \beta_1)g$$

$$v_t = \beta_2 v_{t-1} + (1 - \beta_2)g^2$$

$$\theta_i^{t+1} = \theta_i^t - \alpha \frac{\sqrt{1 - \beta_2}}{(1 - \beta_1)} \frac{m_t}{\sqrt{v_t + \varepsilon}}$$

$$\cdots (4)$$

In Expression 4, t denotes the t-th repetition, $\theta_i^t$ denotes the i-th network parameter in the t-th repetition, and g denotes a gradient of the loss function L with regard to $\theta_i^t$. Then, m and v denote moment vectors, $\alpha$ denotes a base learning rate, $\beta 1$ and $\beta 2$ denote hyper parameters, and $\varepsilon$ denotes a small constant to avoid a division by zero. It is noted that since a guideline for choosing an optimization method in the learning does not particularly exist, any method may be basically used. However, since there is a difference in convergence for each method, it is found out that learning time periods vary.

First Embodiment

A first embodiment of the present disclosure will be described. According to the present embodiment, an example of an information processing apparatus (image processing apparatus) which applies, to an image that is set as a target, information processing (image processing) of reducing a degradation which becomes apparent on the image by using the above-described CNN will be described.

Examples of degradation elements of the image include, for example, a degradation such as noise, blur, an aberration, compression, a low resolution, and a defect, a contrast reduction due to an influence from a weather such as fog, haze, snow, and rain at the time of image capturing, and the like. In addition, examples of the image processing of reducing the degradation which becomes apparent on the image include noise reduction, blur removal, aberration correction, defect complementation, correction of the degradation due to the compression, super resolution processing for the low resolution image, processing of correcting the contrast reduction due to the weather at the time of image capturing, and the like.

The image degradation reduction processing according to the present embodiment is processing of generating an image with no degradation (or with very little degradation) from an image with an apparent degradation, or restoring the image with the apparent degradation to the image with no degradation (or with very little degradation), and will be also referred to as image restoration processing in the following description. That is, not only the processing of restoring the image with the degradation which is obtained in a manner that an image with no (or little) degradation in the image itself has been subjected to subsequent amplification, compression and expression, other image processing, or the like to cause the degradation on the image, but also processing of reducing a degradation included in an original image itself are included in the image restoration processing according to the present embodiment.

It is noted that for convenience, noise will be hereinafter taken as the degradation element of the image as an example, and various explanations will be provided while focusing on an example of implementing noise reduction processing as the image restoration processing.

Image processing system configuration example

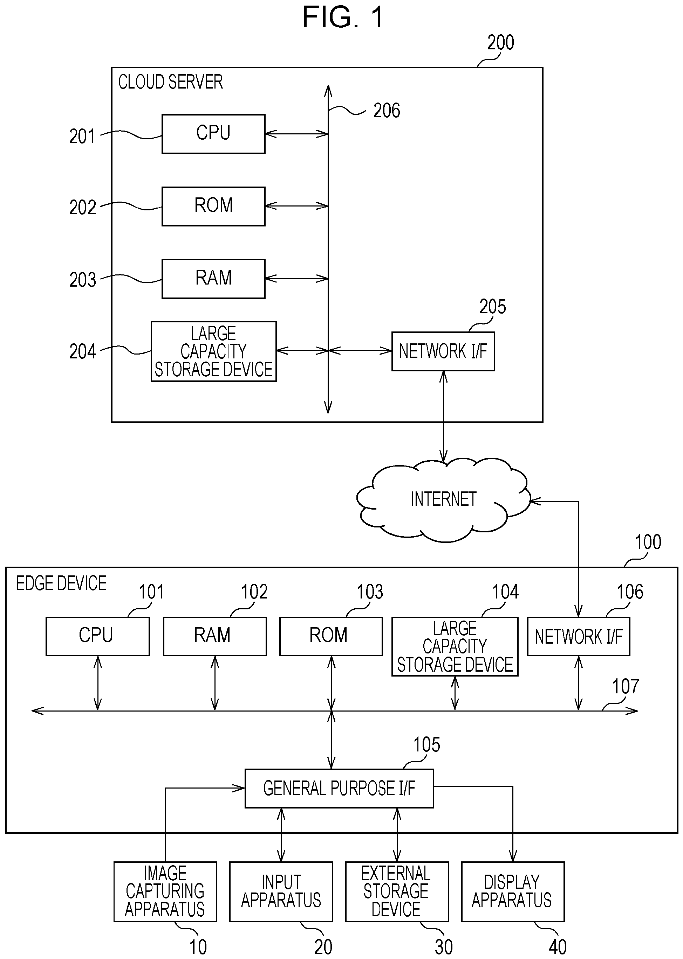

With reference to Fig. 1, an example of a system configuration of an image processing system to which the image processing apparatus according to the present embodiment is applied will be described. The image processing system illustrated in Fig. 1 includes a cloud server 200 responsible for generation of learning data and learning for restoration of an image quality degradation, and an edge device 100 responsible for degradation restoration for an image subjected to processing. In addition, the cloud server 200 and the edge device 100 are connected via a network such as the Internet. Hereinafter, processing related to the generation of the learning data and the learning for the restoration of the image quality degradation in the cloud server 200 will be also referred to as degradation restoration learning, and processing of the degradation restoration in the edge device 100 will be also referred to as degradation restoration inference.

Hardware configuration of edge device

The edge device 100 according to the present embodiment obtains RAW image data (Bayer array) input from an image capturing apparatus 10 as an input image subjected to the image restoration processing. The edge device 100 then performs the degradation restoration inference on the input image subjected to the processing by using a trained neural network model (so-called a model established based on machine learning) which is provided from the cloud server 200. That is, the edge device 100 is equivalent to an image processing apparatus configured to reduce noise of the RAW image data by executing a preinstalled image processing application program by using the model provided from the cloud server 200.

The edge device 100 includes a central processing unit (CPU) 101, a random access memory (RAM) 102, a read only memory (ROM) 103, and a large capacity storge device 104. The edge device 100 also includes a general purpose interface (I/F) 105 and a network I/F 106. Each of the components in the edge device 100 is mutually connected via the system bus 107. In addition, the image capturing apparatus 10, an input apparatus 20, an external storage device 30, and a display apparatus 40 are connected to the edge device 100 via the general purpose I/F 105.

The CPU 101 uses the RAM 102 as a work memory to execute a program stored in the ROM 103 and controls each of the components in the edge device 100 via the system bus 107 in an overall manner. The large capacity storge device 104 is realized by a storage device such as, for example, a hard disk drive (HDD) or a solid state drive (SSD), and stores various data to be dealt with in the edge device 100 and image data. The CPU 101 writes data to the large capacity storge device 104 via the system bus 107 and reads data stored in the large capacity storge device 104.

The general purpose I/F 105 is, for example, a serial bus interface based on a standard such as USB, IEEE1394, or HDMI (registered trademark). The edge device 100 may obtain data from the external storage device 30 (for example, various storage media such as a memory card, a CF card, an SD card, and a USB memory) via the general purpose I/F 105. In addition, the edge device 100 accepts a user instruction from the input apparatus 20 such as a mouse or a keyboard via the general purpose I/F 105. The edge device 100 also outputs the image data or the like processed by the CPU 101 to the display apparatus 40 (for example, various image display devices such as a liquid crystal display) via the general purpose I/F 105. It is noted that the display apparatus 40 may be an integrated type display apparatus which is integrated with a touch panel. In addition, the edge device 100 may obtain data of a captured image (RAW image) subjected to the noise reduction processing from the image capturing apparatus 10 via the general purpose I/F 105.

The network I/F 106 is an interface configured to establish connection to the network such as the Internet. The edge device 100 accesses the cloud server 200, for example, by an installed web browser, and obtains a trained model for the degradation restoration inference.

Hardware configuration of cloud server

The cloud server 200 according to the present embodiment is an information processing apparatus (for example, an image processing apparatus) configured to provide a network service represented by a cloud service on the network such as the Internet. In more detail, the cloud server 200 performs the generation of the learning data and the degradation restoration learning to generate a trained model in which network parameters of a result of the learning and a network structure are stored. The cloud server 200 then provides the generated trained model in response to a request from the edge device 100.

The cloud server 200 includes a CPU 201, a ROM 202, a RAM 203, a large capacity storge device 204, and a network I/F 205. Each of these components in the cloud server 200 is mutually connected via a system bus 206.

The CPU 201 controls an operation of an entirety of the cloud server 200 by executing various processing by reading out a control program stored in the ROM 202. The RAM 203 is used as a main memory of the CPU 201 or a temporary storage area such as a work area. The large capacity storge device 204 is realized by a storage device (for example, a large capacity secondary storage device) such as an HDD or an SSD, and stores the image data and various programs.

The network I/F 205 is an interface configured to establish connection to the network such as the Internet. In response to a request from the edge device 100 using a web browser or the like, the trained model in which the above-described network parameters and network structure are stored is provided to the edge device 100 by the network I/F 205.

It is noted that the edge device 100 and the cloud server 200 may include components other than the above-described components, but detailed descriptions on the other components will not be repeated.

According to the present embodiment, it is assumed that the trained model that is a result of the generation of the learning data and the degradation restoration learning by the cloud server 200 is downloaded to the edge device 100, and the edge device 100 performs the degradation restoration inference on the input image data subjected to the processing.

It is noted that the above-described system configuration is merely an example and is not intended to limit the configuration of the image processing system according to the present embodiment. For example, a configuration may be adopted where the function for which the cloud server 200 is responsible is segmented, and the generation of the learning data and the degradation restoration learning are executed by separate apparatuses. In addition, as another example, a configuration may be adopted where the generation of the learning data, the degradation restoration learning, and the degradation restoration inference are executed in an apparatus (for example, the image capturing apparatus 10) having both the function of the edge device 100 and the function of the cloud server 200.

Functional configuration of entire system

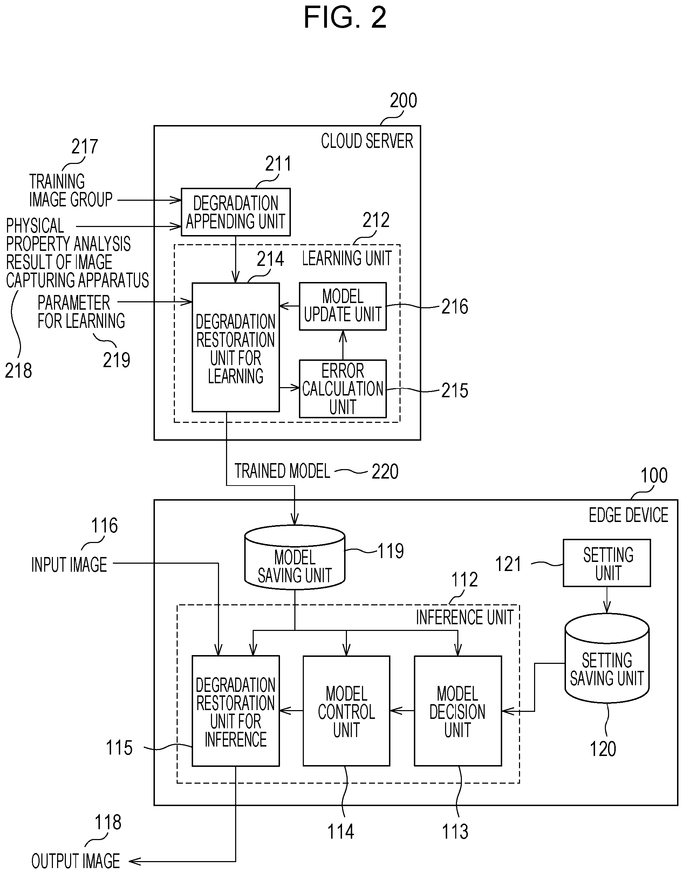

With reference to Fig. 2, an example of a functional configuration of the image processing system according to the present embodiment will be described.

First, an example of a configuration of the edge device 100 will be described. As illustrated in Fig. 2, the edge device 100 includes an inference unit 112 and a model saving unit 119. The model saving unit 119 saves a trained model 220 received from the cloud server 200.

The inference unit 112 has a function of the image restoration processing of reducing the degradation on the image. The inference unit 112 includes a degradation restoration unit 115 for inference, a model decision unit 113, and a model control unit 114. In addition, the degradation restoration unit 115 for inference includes a model execution unit of a neural network for degradation restoration.

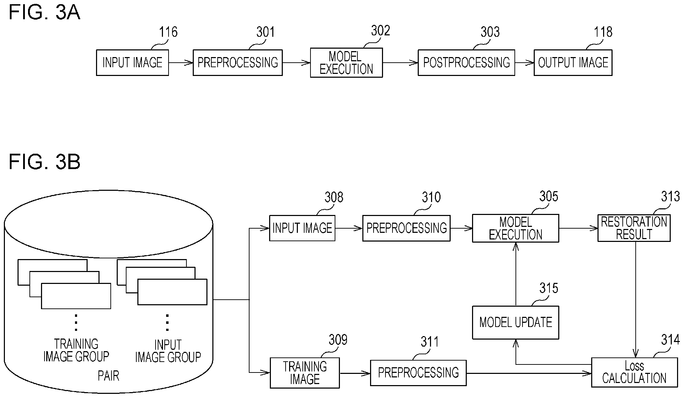

Here, with reference to Fig. 3A, an example of processing by the degradation restoration unit 115 for inference will be described.

The degradation restoration unit 115 for inference obtains input image data 116 and executes preprocessing 301 on the input image data 116 as a target. For example, as the preprocessing 301, processing may be adopted in which a format of the input image data 116 is converted to a format of data which can be accepted as an input by the trained model which is to be applied to the image processing or the like. As a specific example, when the input image data is a 14-bit integer value of the Bayer array, processing of converting each data to a floating point number and normalizing the value to 0.0 to 1.0 or the like may be adopted as the preprocessing 301.

Subsequently, the degradation restoration unit 115 for inference performs model execution 302 by using the trained model 220 in which the data after the preprocessing 301 is used as an input.

The degradation restoration unit 115 for inference then executes postprocessing 303 on a result of the model execution 302 as a target and obtains an output image 118 as a result of the postprocessing. For example, processing of converting a format of data output by the trained model applied to the image processing to a preset output data format (for example, a format similar to the input image data 116) or the like may be adopted as the postprocessing 303. As a specific example, when output result data of the model is a floating point number, processing of converting the value to a 14-bit integer value or the like may be adopted as the postprocessing 303.

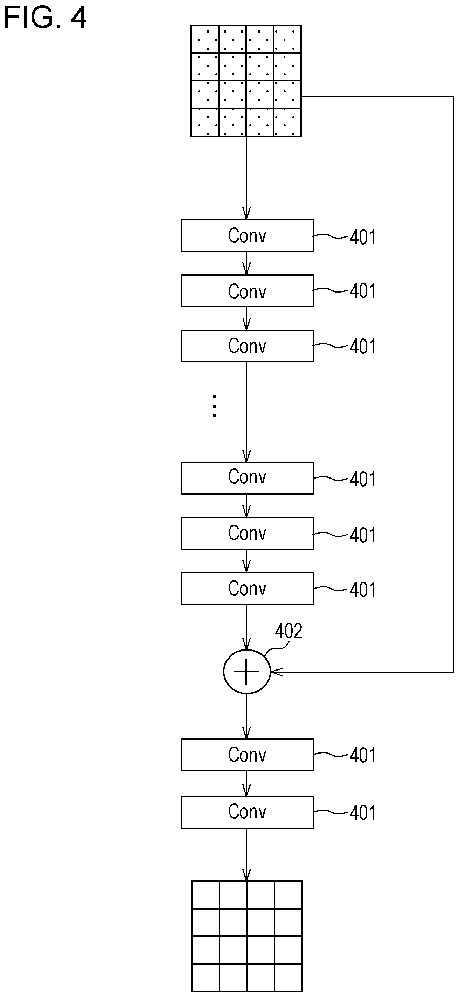

With reference to Fig. 4, an example of a structure of the model applied to the image processing on the input image data will be described. In the example illustrated in Fig. 4, the model is constituted by a plurality of convolution layers 401 and a connected layer 402. In the convolution layers 401, the convolution operation by the filter represented by the above-described Expression 1 and the non-linear operation represented by Expression 2 are repeatedly executed multiple times.

The degradation restoration unit 115 for inference sequentially applies the convolution layer 401 to the input data of the model to calculate a feature map. The degradation restoration unit 115 for inference then connects the feature map and the input data by the connected layer 402 in a channel direction. Furthermore, the degradation restoration unit 115 for inference sequentially applies the convolution layer 401 to a connection result thereof and outputs a result of the series of processing from the final layer.

Here, the description will be provided with reference to Fig. 2 again. The degradation restoration unit 115 for inference performs the degradation restoration inference on the input image data 116 as a target by using the trained model 220 received from the cloud server 200.

The model control unit 114 switches the trained model 220 to be applied to the degradation restoration inference by the degradation restoration unit 115 for inference. A model set as a switching target at this time is decided by the model decision unit 113. A detail of processing related to the switching of the trained model 220 by the model decision unit 113 and the model control unit 114 will be separately described below.

Subsequently, an example of a configuration of the cloud server 200 will be described. The cloud server 200 includes a degradation appending unit 211 and a learning unit 212.

The degradation appending unit 211 appends at least one or more types of degradation elements to training image data taken out from a training image group with no degradation to generate input image data. As described above, since a case where noise is adopted as the degradation element is described according to the present embodiment, the degradation appending unit 211 appends noise as the degradation element to the training image data to generate the input image data. At this time, for example, the degradation appending unit 211 may generate the input image data by analyzing a physical property of the image capturing apparatus and appending, to the training image data, noise as the degradation element equivalent to a degradation amount in a range wider than a degradation amount which may be generated in the image capturing apparatus. In this manner, since the degradation equivalent to the degradation amount in the range wider than that of the analysis result is appended, a margin is prepared such that an influence from an individual difference can be absorbed also in a state in which the range of the deterioration amount varies due to the individual difference of the image capturing apparatus, and it is possible to increase robustness.

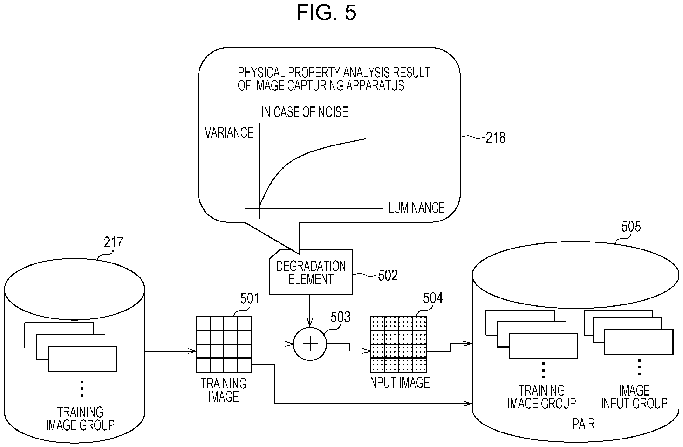

Here, with reference to Fig. 5, processing of appending a degradation to a target image (for example, a training image) will be described. The degradation appending unit 211 generates the input image data 504 by appending, as a degradation element 502, noise based on a physical property analysis result 218 of the image capturing apparatus to training image data 501 taken out from a training image group 217. For example, in the example illustrated in Fig. 5, processing related to the appending of the degradation element 502 to the training image data 501 is schematically illustrated as addition processing 503 for convenience. The degradation appending unit 211 then appends a pair of the training image data 501 and the input image data 504 generated from the training image data 501 to learning data 505. In the above-described manner, the degradation appending unit 211 generates an input image group formed by the plurality of pieces of input image data 504 by appending the degradation element 502 to each training image data included in the training image group 217, and generates the learning data 505 by these input image group and training image group.

It is noted that the noise is described as an example according to the present embodiment, but the degradation appending unit 211 may append any of degradation elements of plurality of types such as the above-described blur, aberration, compression, low resolution, defect, and contrast reduction due to the weather at the time of the image capturing or a combination of several of those to the training image data.

Various types of image data such as, for example, nature photography including a landscape and an animal, personal figure photography such as a portrait or a sport photograph, and artificial object photography such as an architecture and a commercial product may be stored in the training image group 217. It is noted that according to the present embodiment, the training image data is assumed to be RAW image data with each pixel having a pixel value corresponding to any color of R, G, and B in the same manner as that of the input image data 116. In addition, the physical property analysis result 218 of the image capturing apparatus includes, for example, a noise amount for each sensitivity which is generated in an imaging sensor built in a camera (image capturing apparatus), an amount of aberration caused by a lens, and the like. By using such information included in the physical property analysis result 218, it becomes possible to estimate a degree of image degradation that may occur for each image capturing condition. That is, since the degradation estimated for a certain image capturing condition is appended to the training image data, it becomes possible to generate an image substantially equivalent to an image obtained at the time of image capturing.

Here, the description will be provided with reference to Fig. 2 again. The learning unit 212 includes a degradation restoration unit 214 for learning, an error calculation unit 215, and a model update unit 216.

The learning unit 212 obtains a parameter 219 for learning and performs the degradation restoration learning by using the learning data generated by the degradation appending unit 211. The parameter 219 for learning includes an initial value of the parameter of the neural network model, the network structure of the model, and the hyper parameter indicating the optimization method.

The degradation restoration unit 214 for learning generates a degradation restoration image by implementing the image restoration processing on the input image.

The error calculation unit 215 calculates an error between the degradation restoration image generated as a result of degradation restoration processing by the degradation restoration unit 214 for learning and the training image.

The model update unit 216 updates the parameter of the neural network model to be applied to the degradation restoration unit 214 for learning based on the error calculated by the error calculation unit 215.

Here, with reference to Fig. 3B, an example of the processing in the learning unit 212 will be described.

The degradation restoration unit 214 for learning accepts the data obtained by applying preprocessing 310 to the input image data 308 as an input of model execution processing 305, and executes the degradation restoration processing on the data as the model execution processing 305.

In the model execution processing 305, the degradation restoration unit 214 for learning repeats the convolution operation based on the filter and the non-linear operation which are represented by Expression 1 and Expression 2 multiple times on the input data of the model, and outputs a result of the operations as a restoration result 313.

Subsequently, the error calculation unit 215 sets data obtained by implementing preprocessing 311 on the training image data 309 and the restoration result 313 as inputs of Loss calculation processing 314 and executes the Loss calculation processing 314 to calculate an error between those.

Thereafter, by executing model update processing 315 based on the error calculated by the error calculation unit 215, the model update unit 216 updates the network parameters of the model such that the error is further decreased (or eventually, minimized).

It is noted that the configuration illustrated in Fig. 2 is merely an example and can be appropriately transformed or altered as long as the function of each component can be realized. For example, one functional unit may be segmented into a plurality of functional units, or two or more functional units may be integrated into a single functional unit. In addition, the configuration illustrated in Fig. 2 may be realized by two or more apparatuses. In this case, each of the apparatuses is connected via a circuit or a wired or wireless network to mutually perform data communication and carry out a collaborative operation, so that each processing according to the present embodiment is realized.

The degradation restoration unit 115 for inference initializes the trained model 220 and provides the input data to the trained model 220 after the initialization to perform the inference. In the initialization, various types of processing are carried out such as securing a memory to be used in the model and fixing a variable parameter in the model for initiating a state for the model set as a target to be able to execute the inference on the input data. The variable parameter in the model includes, for example, a size of the input data (for example, a size indicating a scale of an image represented by the image data).

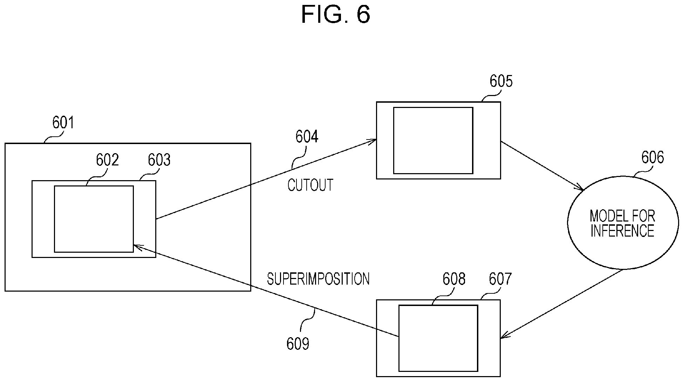

The degradation restoration unit 115 for inference performs the inference by using the model for inference. Here, with reference to Fig. 6, an overview of inference processing executed by the degradation restoration unit 115 for inference will be described.

To perform the inference on a region of interest (ROI) 602 (inference target region) which is set up in an input image 601, the degradation restoration unit 115 for inference cuts out, from the input image 601, a partial region 603 which includes the ROI 602 and which has a size of data an input of which can be accepted by the model for inference. Reference numeral 604 denotes this cutout processing of the partial region 603 from the input image 601. The degradation restoration unit 115 for inference inputs a partial image 605 cut out from the input image 601 through the cutout processing 604 to a model 606 for inference, and obtains an inference result image 607 as an output of the model 606 for inference.

The degradation restoration unit 115 for inference superimposes an ROI result image 608 corresponding to the partial region having the position and the size corresponding to the ROI 602 in the inference result image 607 at a position corresponding to the ROI 602 in the input image 601. Reference numeral 609 denotes this superimposition processing of the ROI result image 608 at the position corresponding to the ROI 602 in the input image 601. Based on this, when the image 601 obtained after the superimposition of the ROI result image 608 is set as an output image, it is possible to obtain an image in which the inference result after the degradation restoration is reflected on only the region corresponding to the ROI 602.

Since the above-described processing is adopted, for example, even when the size of the ROI 602 does not match the input data size of the model 606 for inference (even when the size of the input data is larger than the size of the ROI 602), it is possible to cause the model 606 for inference to perform the inference.

It is noted that in the example illustrated in Fig. 6, although the superimposition of the ROI result image 608 is performed on the input image 601, to keep the original input image 601 unchanged, the superimposition of the ROI result image 608 may be performed on a duplicate of the input image 601.

Subsequently, setup or switching of the model by the model decision unit 113 and the model control unit 114 will be described. The setup or switching of the model by the model decision unit 113 and the model control unit 114 is performed according to the size of the ROI while each of the plurality of initialized models having different input data sizes is set as a candidate. Specifically, the model decision unit 113 determines whether or not the setup or switching of the model for inference which is used by the degradation restoration unit 115 for inference to perform the degradation restoration inference is necessary when an ROI is set up in the input image due to new setup of an ROI, update of the present ROI, or the like. As a more specific example, the model decision unit 113 may determine whether or not a size of the ROI is changed, and when it is determined that the size of the ROI is changed, the model decision unit 113 may determine whether or not the switching of the model to be applied to the degradation restoration inference by the degradation restoration unit 115 for inference is necessary.

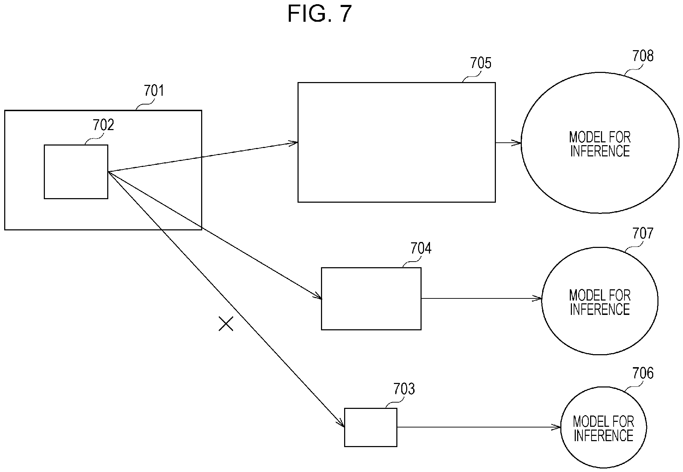

Here, with reference to Fig. 7, an example of a method of deciding a model for inference which is to be applied to the degradation restoration inference by the degradation restoration unit 115 for inference will be described.

The model decision unit 113 decides, as the model of the setup target, a model having a smaller size of the input data than others among a series of models having a size of the input data which is larger than the size of the ROI in a plurality of models set as candidates for a setup target.

As a specific example, the model decision unit 113 according to the present embodiment sequentially determines whether or not data having a size of the ROI set as a target can be accepted as an input by models in ascending order from the model with a smaller size of the input data (that is, whether or not the inference can be performed). Based on this, the model decision unit 113 may decide, as the model of the setup target, the first model determined to be able to accept the data with the size of the ROI as the input.

In the example illustrated in Fig. 7, an ROI 702 (400 pixels wide × 400 pixels high) is set up in an input image 701 (1920 pixels wide × 1080 pixels high). Three types of initialized models 706, 707, and 708 for inference are prepared as a plurality of models serving as candidates for the setup target. In addition, reference numerals 703, 704, and 705 illustrated in Fig. 7 schematically indicate sizes of data which can be accepted as inputs by the models 706, 707, and 708 for inference. Specifically, the model 706 for inference is established so as to be able to accept data with the size 703 (200 pixels wide × 100 pixels high) as an input. The model 707 for inference is established so as to be able to accept data with the size 704 (600 pixels wide × 400 pixels high) as an input. In addition, the model 708 for inference is established so as to be able to accept data with the size 705 (1920 pixels wide × 1080 pixels high) as an input.

First, since the model 706 for inference has the smallest size of the input data, the model 706 for inference is subjected to the determination. At this time, since the size 703 of the input data is smaller than the size of the ROI 702 in terms of both the width and the height, the model 706 for inference is not selected as the model to be the setup target. Then, the model 707 for inference having the second smallest size of the input data after the model 706 for inference is subjected to the determination. At this time, since the model 707 for inference has the size 704 of the input data equal to or larger than the size of the ROI 702 in terms of both the width and the height, the model 707 for inference is selected as the model to be the setup target. It is noted that the model 708 for inference has the size 705 of the input data which is also equal to or larger than the size of the ROI 702 in terms of both the width and the height. However, the model 707 for inference having the smaller size of the input data is selected earlier as the setup target, the model 708 for inference is not selected as the setup target.

The model control unit 114 sets the model decided as the setup target by the model decision unit 113 as the model for inference which is used by the degradation restoration unit 115 for inference to perform the degradation restoration inference. Specifically, when the model for inference which is to be used by the degradation restoration unit 115 for inference to perform the degradation restoration inference is not set up (for example, during initial setup of the ROI), the model control unit 114 sets, as the model for inference, the model decided as the setup target by the model decision unit 113. When the model decided as the setup target by the model decision unit 113 is different from the model for inference which is currently used in the degradation restoration inference by the degradation restoration unit 115 for inference, the model control unit 114 switches the model for inference to the model decided as the setup target. It is noted that at timing at which the model control unit 114 performs the setup of the model for inference which is to be used by the degradation restoration unit 115 for inference to perform the degradation restoration inference, the initialization on the model to be the setup target is not carried out. This is due to a state in which upon initialization by the degradation restoration unit 115 for inference, the initialization is already carried out on each of the plurality of models serving as the candidates for the setup target. For this reason, according to the present embodiment, for example, even when the size of the ROI is changed, the switching to the model according to the changed size of the ROI can be promptly completed.

Processing

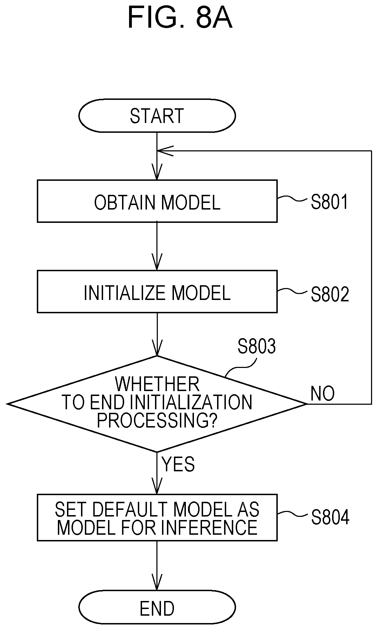

With reference to Figs. 8A to 8C, an example of processing by the image processing system according to the present embodiment will be described.

A series of the processing illustrated in Figs. 8A to 8C is realized when each of the functional units illustrated in Fig. 2 functions since the CPU 101 executes an image processing computer program according to the present embodiment, for example. It is noted however that the series of the processing may also be realized when all or some of the functional units illustrated in Fig. 2 are executed by hardware of the CPU 101.

With reference to Fig. 8A, an example of the processing by the edge device 100 will be described while particularly focusing on the processing related to the initialization by the degradation restoration unit 115 for inference.

In S801, the degradation restoration unit 115 for inference obtains one model to be subjected to the initialization processing (for example, a model on which the initialization is not implemented yet) from among a series of models saved in the model saving unit 119.

In S802, the degradation restoration unit 115 for inference performs the initialization on the model obtained in S801.

In S803, the degradation restoration unit 115 for inference determines whether or not an end condition of the processing related to the model initialization is met. As a specific example, in a case where the initialization on the series of models saved in the model saving unit 119 is completed, it may be determined that the end condition of the processing related to the model initialization is met.

When the degradation restoration unit 115 for inference determines in S803 that the end condition of the processing related to the model initialization is not met, the processing proceeds to S801. In this case, while the model on which the initialization is not implemented yet is set as a target, the processing in S801 and subsequent steps is executed again.

When the degradation restoration unit 115 for inference then determines in S803 that the end condition of the processing related to the model initialization is met, the processing proceeds to S804.

In S804, the degradation restoration unit 115 for inference sets the model, which is set by default among the series of models on which the initialization is implemented, as the model for inference to be applied to the degradation restoration inference processing. Based on this, the degradation restoration unit 115 for inference ends the series of processing illustrated in Figs. 8A to 8C.

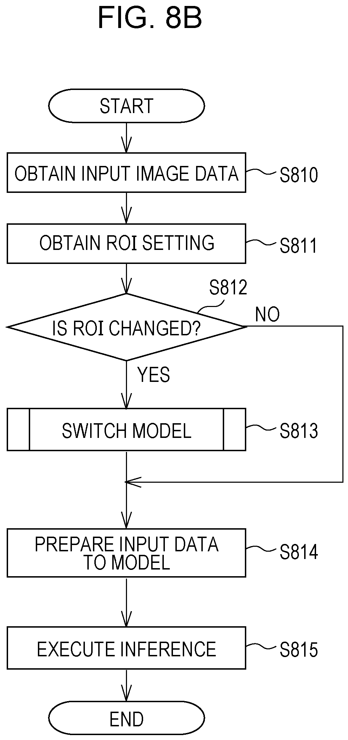

With reference to Fig. 8B, an example of the processing by the edge device 100 will be described while particularly focusing on an example of a case where the degradation restoration inference processing is executed.

In S810, the degradation restoration unit 115 for inference obtains the input image data.

In S811, the degradation restoration unit 115 for inference, the model decision unit 113, and the model control unit 114 obtain an ROI setting from a setting saving unit 120.

In S812, the model decision unit 113 determines whether or not the setting of the ROI is changed.

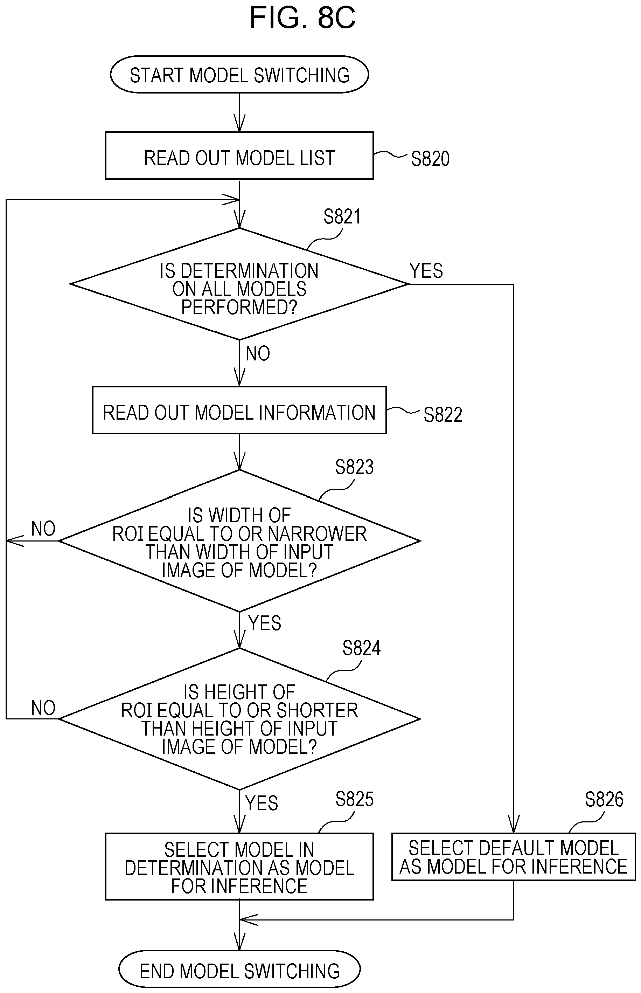

When the model decision unit 113 determines in S812 that the setting of the ROI is changed, the processing proceeds to S813. In S813, the model decision unit 113 and the model control unit 114 execute processing related to switching of the model for inference to be applied to the degradation restoration inference processing. It is noted that a detail of the processing in S813 will be separately described below with reference to Fig. 8C.

On the other hand, when the model decision unit 113 determines in S812 that the setting of the ROI is not changed, the processing proceeds to S814. In this case, the processing in S813 is skipped.

In S814, the degradation restoration unit 115 for inference prepares data to be input to the model for inference. Specifically, when the ROI is set up in the input image data based on the setting of the ROI obtained in S811, the degradation restoration unit 115 for inference cuts out a region equivalent to the ROI from the input image data to be set as the input data to the model for inference. On the other hand, when the ROI is not set up in the input image data, the degradation restoration unit 115 for inference sets the input image data as the input data to the model for inference as it is.

In S815, by inputting the input data prepared in S814 to the model for inference, the degradation restoration unit 115 for inference executes the inference (degradation restoration inference) on the input data as a target.

With reference to Fig. 8C, an example of the processing related to the switching of the model for inference by the edge device 100 which is illustrated as the processing in S813 of Fig. 8B will be described.

In S820, the model decision unit 113 reads out a list of the models for inference which serve as candidates subjected to be applied to the degradation restoration inference processing. It is noted that according to the present embodiment, the models are sorted in ascending order of the size of the input data while it is assumed that with regard to the list of the models for inference, the model for inference which is to be applied to the degradation restoration inference processing is decided according to the method described with reference to Fig. 7. It is noted however that a management method for the list of the models for inference is not particularly limited, and for example, the list of the models for inference may be managed in a state in which the models are sorted based on other conditions.

In S821, the model decision unit 113 determines whether or not the determination is performed on the series of models for inference which are read out in S820 on whether or not the model is subjected to be applied to the degradation restoration inference processing.

When the model decision unit 113 determines in S821 that the determination is performed on the series of models for inference on whether or not the model is subjected to be applied to the degradation restoration inference processing, the processing proceeds to S826.

On the other hand, when the model decision unit 113 determines in S821 that the determination is not performed on the series of models for inference on whether or not the model is subjected to be applied to the degradation restoration inference processing, the processing proceeds to S822.

In S822, the model decision unit 113 reads out one piece of information of the model on which a determination which will be described as S823 and S824 below is not performed yet from among the series of models for inference which are read out in S820.

In S823, the model decision unit 113 determines, based on the setting of the ROI obtained in S811 in Fig. 8B, whether or not the width of the target ROI is equal to or narrower than a width of the input image of the model set as a target (the model the information of which has been read out in S822).

When the model decision unit 113 determines in S823 that the width of the target ROI is equal to or narrower than the width of the input image of the model set as a target, the processing proceeds to S824.

On the other hand, when the model decision unit 113 determines in S823 that the width of the target ROI is not equal to or narrower than the width of the input image of the model set as a target, the processing proceeds to S821.

In S824, the model decision unit 113 determines, based on the setting of the ROI obtained in S811 in Fig. 8B, whether or not the height of the target ROI is equal to or narrower than the height of the input image of the model set as a target (the model the information of which has been read out in S822).

When the model decision unit 113 determines in S824 that the height of the target ROI is equal to or narrower than the height of the input image of the model set as a target, the processing proceeds to S825.

On the other hand, when the model decision unit 113 determines in S824 that the height of the target ROI is not equal to or narrower than the height of the input image of the model set as a target, the processing proceeds to S821.

In S825, the model decision unit 113 selects the model subjected to the determination at the point in time as the model for inference subjected to be applied to the degradation restoration inference processing. Based on this, as the model for inference which is set by the degradation restoration unit 115 for inference which is subjected to be applied to the degradation restoration inference processing, the model control unit 114 sets the model selected by the model decision unit 113. With this configuration, the model for inference which is set for the degradation restoration unit 115 for inference is switched to the model selected by the model decision unit 113 (that is, the model decided to be subjected to the restoration inference processing).

In S826, the model decision unit 113 selects the model by default as the model for inference which is subjected to be applied to the degradation restoration inference processing. Based on this, as the model for inference which is set by the degradation restoration unit 115 for inference which is subjected to be applied to the degradation restoration inference processing, the model control unit 114 sets the model selected by the model decision unit 113 (that is, the default model). With this configuration, the model for inference which is set for the degradation restoration unit 115 for inference is switched to the default model selected by the model decision unit 113.

The example of the processing by the image processing system according to the present embodiment has been described above. In the image processing system according to the present embodiment, as described above, upon the setup of the model along with the initial setup of the ROI or the setup (or switching) of the model along with the change of the ROI, the model on which the initialization has been performed in advance is adopted. With the application of such control, upon the setup of the model (for example, the switching of the model), no waiting time is generated along with the initialization on the model set as a target, it becomes possible to promptly complete the setup of the model to be used in the inference. Due to such a feature, the image processing system according to the present embodiment particularly has high compatibility with a use case in which while the size of the ROI set up in the image is sequentially changed, the inference is performed on the ROI after the change as a target.

It is noted that according to the present embodiment, an example of the case has been described where noise is adopted as the degradation element, but the degradation element is necessarily limited to noise. As described above, the degradation elements include the blur, aberration, compression, low resolution, defect, contrast reduction due to the influence from the weather such as fog, haze, snow, and rain at the time of the image capturing, and the like, and any of these or a combination of two or more of these may be adopted as the degradation element.

In addition, according to the present embodiment, an example of the case where the restoration is performed from the input image data by using the trained model on the edge device side has been described, but a parameter assisting the degradation restoration may also be used. For example, information indicating an extent to which an image quality degradation is expected to occur depending on an image capturing condition such as a distance to a subject, a focal length, a sensor size, or an exposure may be held as a lookup table in advance. Based on this, for example, upon adoption of the degradation restoration inference processing on the input image data, a restoration amount may be adjusted according to the information held in the above-described lookup table. In this manner, the inference unit 112 of the edge device 100 may adjust, based on the image capturing condition during the image capturing of the image indicated by the input image data, an intensity of the degradation restoration targeting the input image data.

In addition, according to the present embodiment, an example of the case where the model performs the degradation restoration processing has been described, but a task of the model is not limited to the degradation restoration processing.

Second Embodiment

A second embodiment of the present disclosure will be described below. According to the above-described first embodiment, an example of the case where the model to be applied to the inference is decided based on the setting of the ROI has been described. According to the first embodiment, with the application of such control, when the setting of the ROI is changed, the model applied to the inference can be switched to the model according to the setting of the ROI. In contrast, according to the present embodiment, an example of control for inhibiting the switching of the model even when the setting of the ROI is changed and an example of control for automatically performing the setup of the ROI by using the detection result or the like of the object in the image will be described. It is noted that according to the present embodiment, a description will be provided while focusing on a part especially different from that of the above-described first embodiment, and a detailed description of a part substantially similar to that of the first embodiment will be omitted.

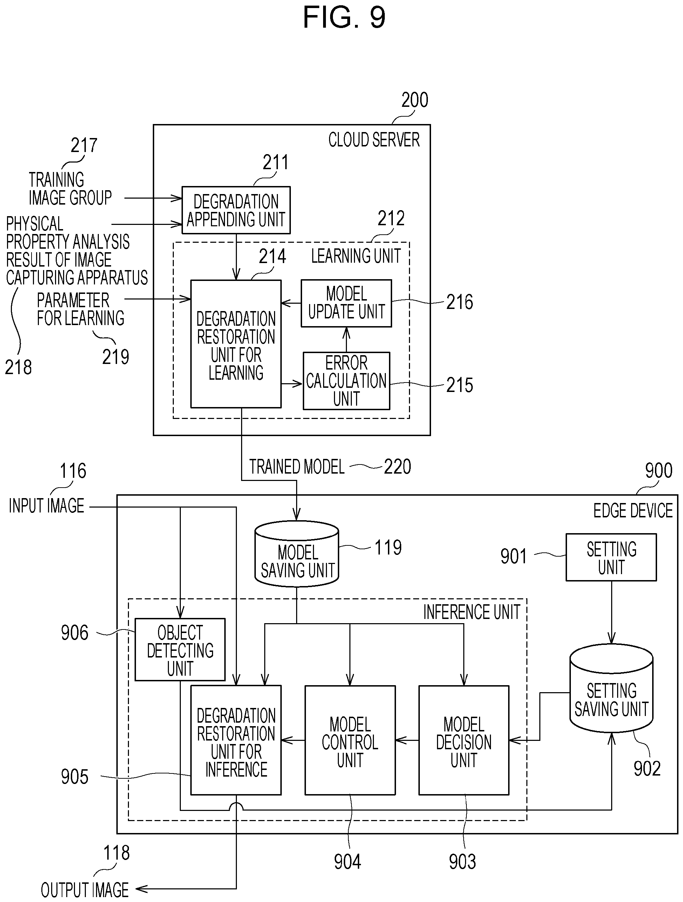

With reference to Fig. 9, an example of the functional configuration of the image processing system according to the present embodiment will be described. As illustrated in Fig. 9, the edge device according to the present embodiment includes a setting unit 901 and a setting saving unit 902. The setting unit 901 accepts an input of a setting via the input apparatus 20 or the network I/F 106, and saves the input setting in the setting saving unit 902.

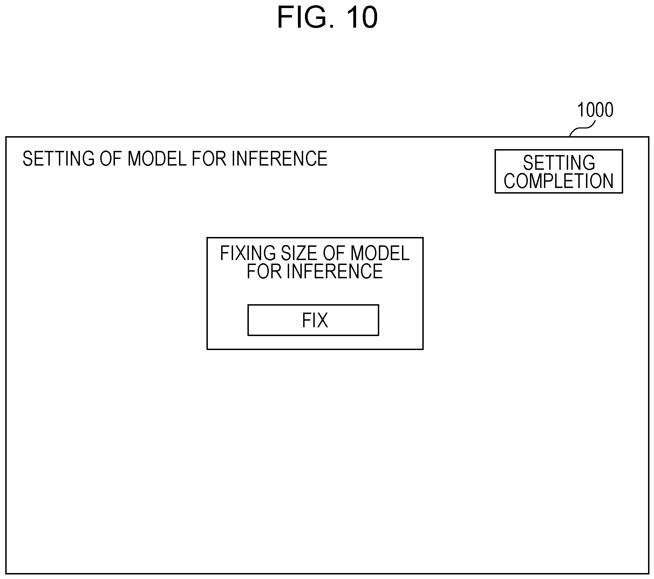

Here, with reference to Fig. 10, an example of the setting screen of the image processing system according to the present embodiment will be described. A setting screen 1000 illustrated in Fig. 10, for example, is presented to a user by being displayed on the display apparatus 40, and accepts an instruction (for example, an instruction related to the selection of the value or the like) from the user via the input apparatus 20. The setting screen 1000 is equivalent to an example of a setting screen for accepting a designation related to the setting of the model for inference from the user. The setting of the model for inference which is designated via the setting screen 1000 is referred to when a model decision unit 903 decides a model to be applied to degradation restoration inference processing by a degradation restoration unit 905 for inference.

Examples of an item regarding the setting of the model for inference include, for example, a setting on whether or not the size of the model for inference is fixed. Specifically, in a case where the setting is made in which the size of the model for inference is fixed, the switching of the model for inference is inhibited even when the size of the ROI is changed. In a case where the setting is made in which the size of the model for inference is variable, the determination related to the switching of the model for inference is performed when the size of the ROI is changed.

The value designated via the setting screen 1000 is saved in the setting saving unit 902.

With this configuration, it becomes possible to refer to the above-described value saved in the setting saving unit 902 by accessing the setting saving unit 902.

It is noted that in the example illustrated in Fig. 10, an example of the case where the input of the setting is performed by using the display apparatus 40 and the input apparatus 20 has been described, but the input of the setting may be performed according to other methods. As a specific example, the input of the setting to an edge device 900 may be performed based on information transmitted via a network to which the network I/F 106 is connected.

An object detecting unit 906 detects a position and a size of an object (for example, an object to be detected) in the image indicated by the input image data 116 by executing various analyses (for example, an image analysis) using the input image data 116 as an input, and saves a detection result in the setting saving unit 902.

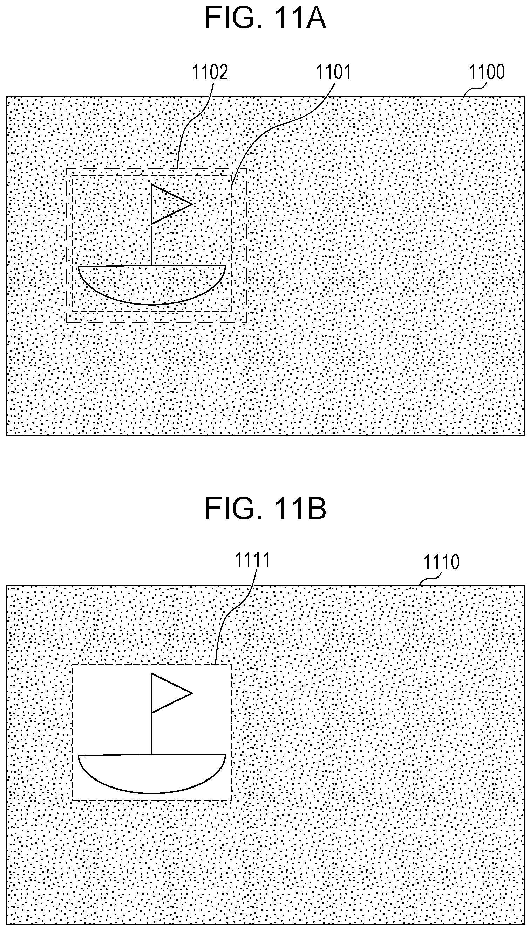

With reference to Figs. 11A and 11B, an example of processing related to ROI automatic setup using a detection result of an object in an image will be described. Figs. 11A and 11B illustrate an example of a case where a boat captured as a subject in an image is detected, and an ROI is set up in a region corresponding to the boat in the image.

Specifically, as illustrated in Fig. 11A, as a result of the object detection performed on an image 1100 as a target, a region 1101 corresponding to the boat is identified since the boat in the image is detected, and an ROI 1102 is set up for the region 1101. Based on this, the degradation restoration inference processing is performed on a region as a target which includes at least the region 1101 corresponding to the boat in the image for which the ROI 1102 is set up, and a result of the processing is superimposed on the region 1101.

For example, Fig. 11B illustrates an example of a result after the degradation restoration inference processing is performed on the region 1101 as a target in which the ROI 1102 is set up in the image 1100 illustrated in Fig. 11A. Specifically, in an image 1110 after the degradation restoration inference processing illustrated in Fig. 11B, a result after noise reduction is performed on the region 1101 is superimposed on a region 1111 corresponding to the region 1101 in Fig. 11A.

When the size of the ROI set up in the image 1100 illustrated in Fig. 11A is changed, the switching of the model for inference to be applied to the degradation restoration inference processing is performed according to the changed size of the ROI similarly as in the first embodiment. Based on this, the degradation restoration inference processing is executed on the region corresponding to the ROI after the change as a target by using the post-switching model for inference, and a result of the processing is superimposed on the region corresponding to the ROI after the change.

It is noted that in the example illustrated in Fig. 11A and Fig. 11B, for convenience, the regions 1101, 1102, and 1111 are indicated by broken lines, but when the image is actually displayed, information indicating these regions does not necessarily need to be visualized. As a specific example, in a case where these regions are presented to the user, the regions in the image may be visualized.

Processing

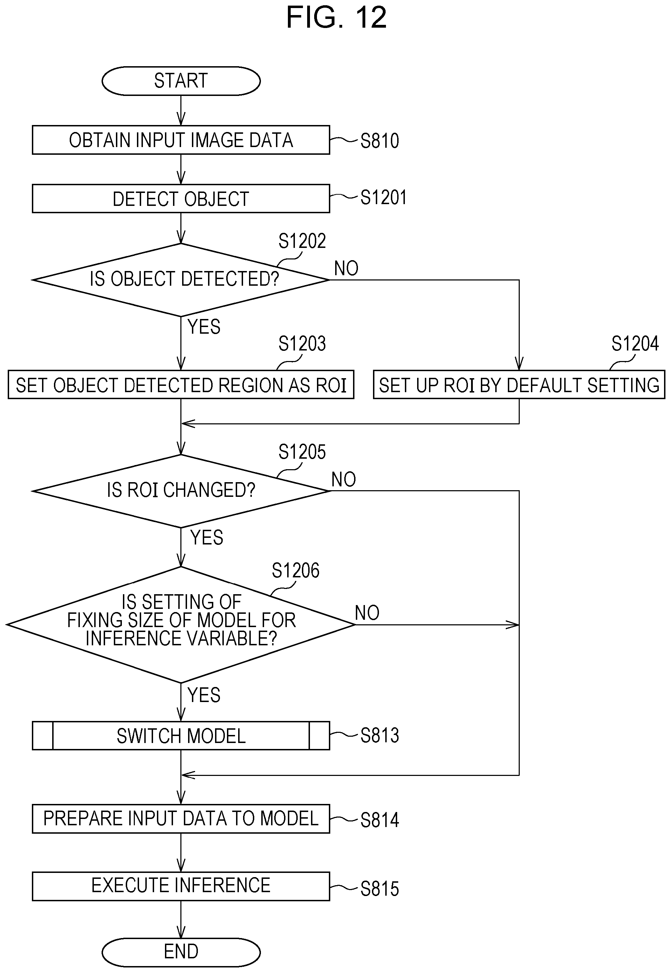

With reference to Fig. 12, an example of the processing of the image processing system according to the present embodiment will be described while particularly focusing on the degradation restoration inference processing by the edge device 900. It is noted that in the example illustrated in Fig. 12, a description will be provided while focusing on a part especially different from that of the first embodiment, and a detailed description of a part substantially similar to that of the first embodiment will be omitted.

In S 1201, the object detecting unit 906 detects an object in an image by implementing an image analysis related to sensing of the object on the input image data to attempt to identify a position and a size of the object in the image.

In S1202, the object detecting unit 906 determines whether or not the object is detected from the image in S1201.

When the object detecting unit 906 determines in S1202 that the object is detected from the image, the processing proceeds to S1203. In S1203, the setting unit 901 automatically sets up an ROI in a region corresponding to the object in the image based on the detection result of the object from the image in S1201.

On the other hand, when the object detecting unit 906 determines in S1202 that the object is not detected from the image, the processing proceeds to S1204. In S1204, the setting unit 901 performs the setup of the ROI according to a default setting. As a specific example, the setting unit 901 may set up the ROI for a region corresponding to an entire target image. This control is of course merely an example, and what control is to be adopted as the default setting may be appropriately set according to a use case.

In S1205, the model decision unit 903 determines whether or not the setting of the ROI is changed.

When the model decision unit 903 determines in S1205 that the setting of the ROI is changed, the processing proceeds to S1206.

On the other hand, when the model decision unit 903 determines in S1205 that the setting of the ROI is not changed, the processing proceeds to S814. In this case, the processing in S1206 and S813 is skipped.

In S1206, the model decision unit 903 reads out a set value of the setting indicating whether or not the size of the model for inference is fixed which is saved in the setting saving unit 902, and determines whether or not the set value indicates that the size of the model for inference is variable.

When the model decision unit 903 determines that the set value read out in S1206 indicates that the size of the model for inference is variable, the processing proceeds to S813.

On the other hand, when the model decision unit 903 determines that the set value read out in S1206 indicates that the size of the model for inference is not variable (is fixed), the processing proceeds to S814. In this case, the processing in S813 is skipped.

As described above, in the image processing system according to the present embodiment, even when the setting of the ROI is changed, in a case where a setting of fixing the size of the model for inference is made, the edge device 900 inhibits the switching of the model for inference. With such a mechanism, it becomes possible for the user to performs the control with intention on whether or not the switching of the model for inference along with the change of the ROI is adopted. In addition, with the image processing system according to the present embodiment, it becomes possible to automatically set up the ROI by using the detection result of the object from the image. With this configuration, as compared with a case where the ROI is manually set up, an advantage of reducing trouble of the user can be expected.

Third Embodiment

As a third embodiment of the present disclosure, an example of the network structure of the trained model 220 applied to the degradation restoration inference processing by the degradation restoration unit 905 for inference will be described while focusing on a case of adopting a recurrent configuration in which a previous inference result is used. It is noted that according to the present embodiment, a description will be provided while focusing on a part especially different from that of the above-described first and second embodiments, and a detailed description of a part substantially similar to that of the first and second embodiments will be omitted.

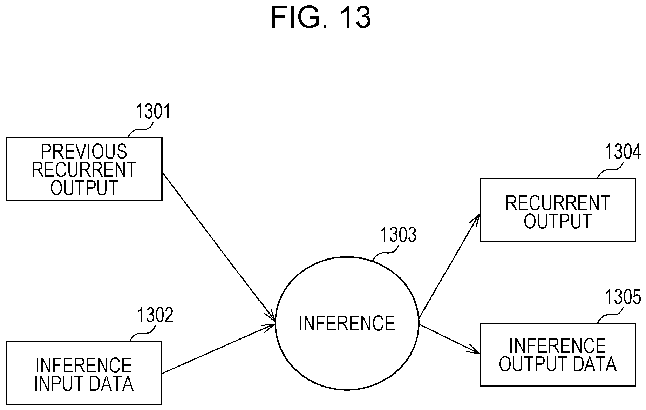

With reference to Fig. 13, an example of the network structure of the trained model 220 applied to the degradation restoration inference processing by the degradation restoration unit 905 for inference according to the present embodiment will be described. It is noted that in the example illustrated in Fig. 13, input data (hereinafter, also referred to as inference input data 1302) to the trained model (neural network) is assumed to be data obtained by applying the preprocessing 301 to the input image data 116. In addition, the neural network to be adopted as the model for inference 1303 which is illustrated in Fig. 13 is assumed to be a neural network of the recurrent configuration. The recurrent configuration is a configuration in which part of the previous inference result is repurposed as latest input data. Since the previous inference result is repurposed as the latest input data, such an advantage can be expected that consistency and continuity of the inference result in a time direction are improved.

A previous recurrent output 1301 and the inference input data 1302 are input to the model for inference 1303. A previous recurrent output 1304 is data that is output as part of the previous inference result. It is noted that according to the present embodiment, the image data having the same image size and the same number of channels as those of the inference input data 1302 is adopted as the previous recurrent output 1304, but does not limit a type of the data to be adopted as the previous recurrent output 1304.

A recurrent output 1304 and inference output data 1305 are output from the model for inference 1303 as the result of the inference. The inference output data 1305 is data of the image on which the degradation restoration inference processing is performed which is output as the result of the inference. In addition, the recurrent output 1304 is equivalent to part of the image data which is output as the result of the inference (data of the image on which the degradation restoration inference processing is performed), and used as the previous recurrent output 1301 equivalent to part of the input data in the next inference.

It is noted that the previous recurrent output 1301 does not exist at the time of the first inference or at the time of the inference immediately after the model is switched. In such a case, for example, initial data (in other words, dummy data) such as data equivalent to a black image may be used as the previous recurrent output 1301. In addition, as another example, the recurrent output 1304 that is part of data output by the pre-switching model for inference as the previous inference result may be used as the previous recurrent output 1301. It is noted that according to the present embodiment, with regard to the control in a case where the previous recurrent output 1301 does not exist, a configuration is adopted in which any of the above-described operations can be switched by the setting.

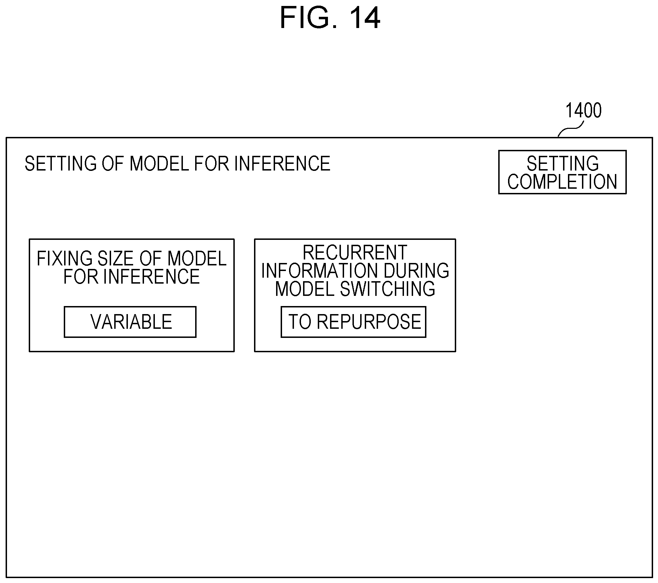

Here, with reference to Fig. 14, an example of a setting screen of the image processing system according to the embodiment will be described. A setting screen 1400 illustrated in Fig. 14, for example, is presented to the user by being displayed on the display apparatus 40, and accepts an instruction from the user via the input apparatus 20 (for example, an instruction or the like related to the selection of the value). The setting screen 1400 is equivalent to an example of the setting screen for accepting the designation related to the setting of the model for inference from the user. A reference is made to the setting of the model for inference which is designated via the setting screen 1400 when the model decision unit 903 decides a model to be applied to the degradation restoration inference processing by the degradation restoration unit 905 for inference.

Examples of an item regarding the setting of the model for inference include, for example, a setting on whether or not the output of the pre-switching model for inference is repurposed as recurrent information serving as an input to the model for inference when the model for inference is switched.

Specifically, it is possible to designate such a setting that the output of the pre-switching model for inference is repurposed as the recurrent information serving as an input to the model for inference. In this case, when the pre-switching recurrent information can be used at the time of the switching of the model for inference, the recurrent information is repurposed as an input to the post-switching model for inference.

In addition, it is possible to designate such a setting that the recurrent information serving as an input to the model for inference is created. In this case, the inference is performed by the pre-switching model for inference and the inference is performed by the post-switching model for inference in parallel. Then, recurrent information is generated based on a result of the inference performed a predetermined number of times by the post-switching model for inference, and after the recurrent information is generated, the switching of the model for inference is performed. In this case, since the pre-switching model for inference and the post-switching model for inference perform the inference in parallel, a use amount of a computer resource such as a CPU or a graphics processing unit (GPU) of the image processing apparatus tends to be higher as compared with a case where only one of the pre-switching model and the post-switching model performs the inference. For this reason, for example, in a case where the pre-switching model for inference and the post-switching model for inference are caused to perform the inference in parallel, a frame rate related to the inference may be restricted according to a use state of the computer resource used for the inference. With the application of such control, it also becomes possible to restrict the use amount of the computer resource along with the execution of the inference.

In addition, such a setting can be designated that initial data is used as the recurrent information serving as an input to the model for inference. In this case, when the switching of the model for inference is performed, initial data such as a black image is used as the recurrent information serving as an input to the post-switching model for inference.

A value designated via the setting screen 1400 is saved in the setting saving unit 902.

With this configuration, by accessing the setting saving unit 902, the model decision unit 903 can refer to the above-described value saved in the setting saving unit 902.

It is noted that in the example illustrated in Fig. 14, an example of the case where the setting is input by using the display apparatus 40 and the input apparatus 20, but the setting may be input according to other methods. As a specific example, the setting may be input to the edge device 900 by the information transmitted through the network to which the network I/F 106 is connected.

Processing

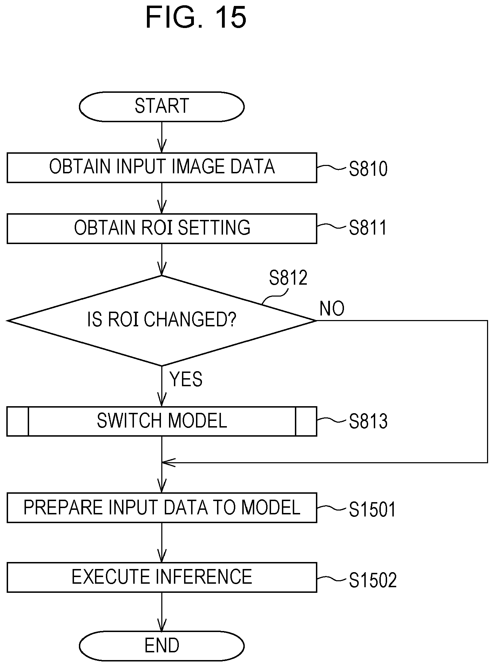

With reference to Fig. 15, an example of the processing by the image processing system according to the present embodiment will be described while particularly focusing on the degradation restoration inference processing by the edge device 900. It is noted that in the example illustrated in Fig. 15, a description will be provided while focusing on a part especially different from that of the first embodiment, and a detailed description of a part substantially similar to that of the first embodiment will be omitted.

In S1501, the degradation restoration unit 115 for inference prepares data to be input to the model for inference. Specifically, in a case where the ROI is set up in the input image data based on the setting of the ROI obtained in S811, the degradation restoration unit 115 for inference cuts out a region corresponding to the ROI from the input image data to be set as the input data to the model for inference. On the other hand, in a case where the ROI is not set up in the input image data, the degradation restoration unit 115 for inference sets the input image data as the input data of the model for inference as it is. Furthermore, the degradation restoration unit 115 for inference also sets the held previous recurrent output as the input data to the model for inference.

Herein, in a case where the setting of the recurrent information at the time of the model switching which is read out from the setting saving unit 902 indicates the repurposing of the pre-switching recurrent output, the recurrent output before the model switching is repurposed as the previous recurrent output by the degradation restoration unit 115 for inference. In a case where the setting of the recurrent information indicates the use of the initial data, the degradation restoration unit 115 for inference sets the predetermined initial data such as the data equivalent to the black image as the previous recurrent output. In the case of these settings, by inputting the input data prepared in S1501 to the post-switching model for inference in S1502, the degradation restoration unit 115 for inference executes the inference (degradation restoration inference) on the input data as a target.

In a case where the setting of the recurrent information indicates the creation of the recurrent information, after the inference is performed a predetermined number of times by the post-switching model for inference, the recurrent information is generated based on the result of the inference performed the predetermined number of times, and then the degradation restoration unit 115 for inference switches the model. In this case, in S1502, until the post-switching model for inference is performed the predetermined number of times, the degradation restoration unit 115 for inference causes the pre-switching model for inference to perform the inference in parallel. With the application of such control, also in a state before the recurrent output based on the inference result by the post-switching model for inference is created, the degradation restoration on the target image can be performed by using the inference result of the pre-switching model for inference.

As described above, in the image processing system according to the present embodiment, in a state in which the network structure using the previous recurrent output as an input to the model for inference is adopted, it becomes possible for the user to set a method of preparing the previous recurrent output. With such a mechanism, the switching can be appropriately performed such that a behavior of the system during the model switching becomes a behavior desired by the user.

Fourth Embodiment

As a fourth embodiment of the present disclosure, an example of a case where the inference is performed on a region as a target which covers a plurality of ROIs and an example of a case where an initialized model can be added based on a setting will be described. It is noted that according to the present embodiment, a description will be provided while focusing on a part especially different from that of the above-described first to third embodiments, and a detailed description of a part substantially similar to that of the first to third embodiments will be omitted.

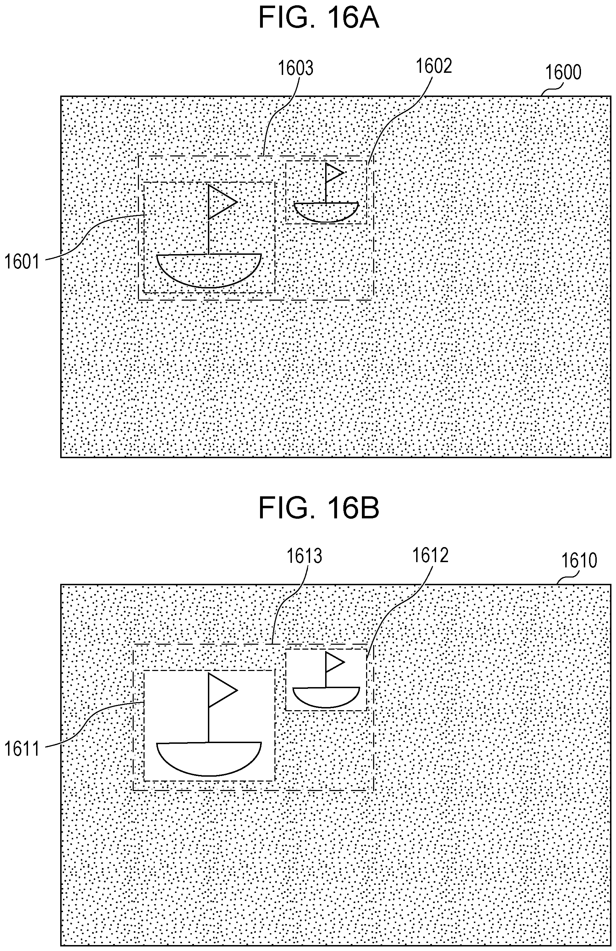

Figs. 16A and 16B schematically illustrate an example of a state in which as a result of detection of a plurality of objects in an image, the ROI is automatically set up for each of the plurality of obj ects. Figs. 16A and 16B illustrate an example of a case where each of a plurality of boats captured as subjects in the image is detected, and the ROI is set up for a region corresponding to each of the plurality of boats in the image.

Specifically, as illustrated in Fig. 16A, as a result after object detection is performed on an image 1600 as a target, since the two boats in the image are detected, regions 1601 and 1602 corresponding to the respective two boats are identified. Based on this, in the example illustrated in Fig. 16A, instead of individually setting up the ROI for the detection result of each of the two objects (two boats), a single ROI 1603 covering the two objects is set up. With the application of such control, the number of times to perform the inference using the model for inference can be suppressed to one time in which the inference is performed on the ROI 1603 as a target. Based on this, the degradation restoration inference processing is performed on a region as a target which includes at least the regions 1601 and 1602 corresponding to the two boats in the image for which the ROI 1603 is set up, and a result of the processing is superimposed on the regions 1601 and 1602.

For example, Fig. 16B illustrates an example of a result after the degradation restoration inference processing is performed on the regions 1601 and 1602 as targets in which the ROI 1603 is set up in the image 1600 illustrated in Fig. 16A. In Fig. 16B, a region denoted by reference numeral 1613 is equivalent to the region corresponding to the ROI 1603 illustrated in Fig. 16A. In addition, in Fig. 16B, regions denoted by reference numerals 1611 and 1612 are regions corresponding to the regions 1601 and 1602 in Fig. 16A. That is, in an image 1610 after the degradation restoration inference processing illustrated in Fig. 16B, a result after noise reduction is performed on the regions 1601 and 1602 is superimposed on the region 1611 and the region 1612 included in the region 1613.

When the size of the ROI set up in the image 1600 illustrated in Fig. 16A is changed, the switching of the model for inference to be applied to the degradation restoration inference processing is performed according to the changed size of the ROI similarly as in the first embodiment. Based on this, the degradation restoration inference processing is executed by using the post-switching model for inference on the region corresponding to the ROI after the change as a target, and a result of the processing is superimposed on the region corresponding to the ROI after the change.

It is noted that according to the present embodiment, an example of the case has been described where the ROI is set up in the region as a target which covers each of the plurality of detected objects from the image, but an ROI may be individually set up in each of the regions of the plurality of objects. In this case, the inference by the model for inference is individually performed on each of the ROIs.

In addition, in the example illustrated in Fig. 16A and Fig. 16B, for convenience, the regions 1601, 1602, 1611, and 1612 are indicated by broken lines, but when the image is actually displayed, information indicating these regions does not necessarily need to be visualized. As a specific example, in a case where these regions are presented to the user, the regions in the image may be visualized.

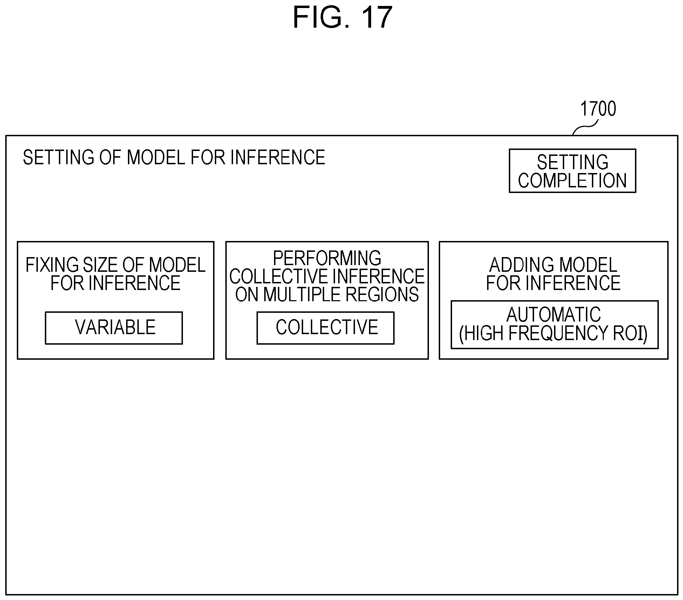

Here, with reference to Fig. 17, an example of the setting screen of the image processing system according to the embodiment will be described. A setting screen 1700 illustrated in Fig. 17 is presented to the user by being displayed on the display apparatus 40, for example, and accepts an instruction (for example, an instruction or the like related to selection of a value) from the user via the input apparatus 20. The setting screen 1700 is equivalent to an example of the setting screen for accepting the instruction related to the setting of the model for inference from the user.

Examples of the item regarding the setting of the model for inference include, for example, a setting related to an application method of the inference by the model for inference in a case where a plurality of objects are detected from an image.

Specifically, it is possible to designate such a setting that the inference is collectively performed on detection results of the plurality of objects from the image. In this case, a single ROI is set up so as to cover regions respectively corresponding to the plurality of objects for the detection results of the plurality of objects from the image, and the inference by the model for inference is performed on the single ROI as a target.

It is also possible to designate such a setting that the inference is individually performed on each of the detection results of the plurality of objects from the image. In this case, an ROI is individually set up for each of the detection results of the plurality of objects from the image, and the inference by the model for inference is individually performed on the individual ROI as a target.

In addition, examples of the item regarding the setting of the model for inference as another example include a setting of an operation related to addition of an inference model to be used for the inference.

For example, it is also possible to designate such a setting that when the ROI is set up or updated, in a case where an initialized model corresponding to a condition of an ROI (for example, a size) does not exist, the model for inference is newly automatically initialized in accordance with the ROI. In addition, a condition for setting a target of the above-described automatic initialization on the model for inference as a target may be designated. As a specific example, the setting of the automatic initialization illustrated in the above can be designated while setting the ROI as a target on which the setup or update is performed at a frequency equal to or higher than a threshold within a predetermined time period. In this case, when no initialized model exists corresponding to the size of the ROI on which the setup or update is performed at a frequency equal to or higher than the threshold within the predetermined time period, the model for inference which can accept the data of the size of the ROI as an input is newly initialized. It is noted that by causing the processing related to the model initialization in this case to be executed, for example, in parallel with the inference by the pre-switching model, generation of the waiting time along with the initialization upon the model switching can be avoided.

In addition, it is possible to designate such a setting that the model for inference is manually added. In this case, a condition (for example, the size of the input data or the like) of the model for inference which is to be added is accepted via the setting screen 1700, and the model for inference to be added based on the designation is initialized.

It is also possible to designate such a setting that the addition of the model for inference is restricted. In this case, for example, also in a case where no initialized model exists corresponding to the condition of the ROI (for example, the size), the addition of the new model for inference is not performed.

A value designated via the setting screen 1700 is saved in the setting saving unit 902.

With this configuration, by accessing the setting saving unit 902, it becomes possible for the model decision unit 903 to refer to the above-described value saved in the setting saving unit 902.

It is noted that in the example illustrated in Fig. 17, an example of the case has been described where the input of the setting is performed by using the display apparatus 40 and the input apparatus 20, but the input of the setting may be performed according to other methods. As a specific example, the input of the setting to the edge device 900 may be performed based on the information transmitted via the network to which the network I/F 106 is connected.

Processing

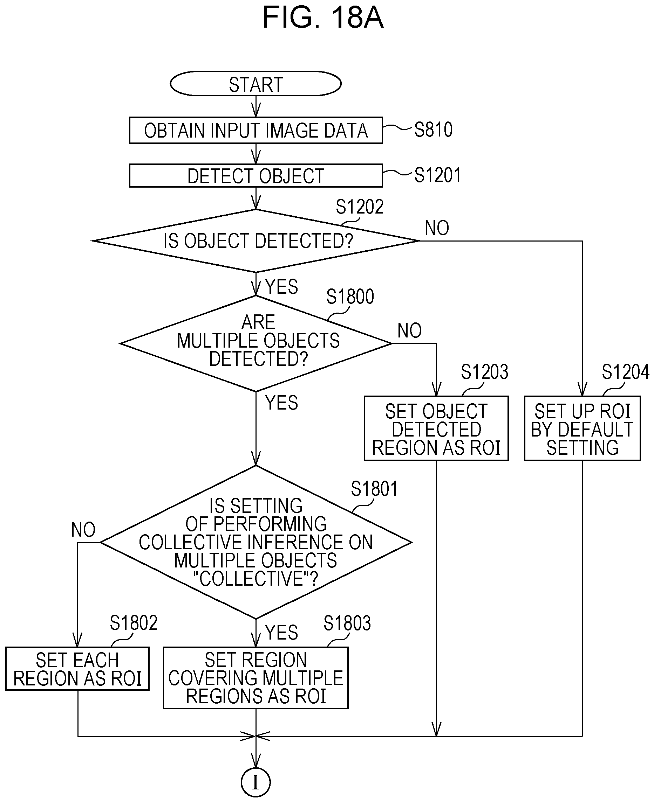

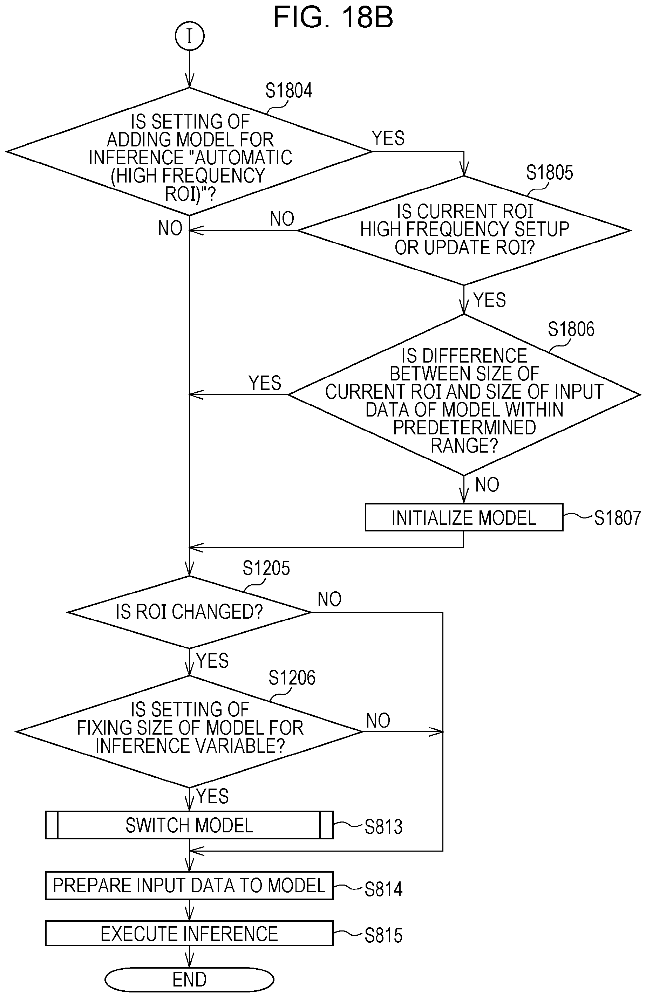

With reference to Figs. 18A and 18B, an example of the processing by the image processing system according to the present embodiment will be described while particularly focusing on the degradation restoration inference processing by the edge device 900. It is noted that with regard to the example illustrated in Figs. 18A and 18B, a description will be provided while focusing on a part especially different from that of the first to third embodiments, and a detailed description of a part substantially similar to that of the first to third embodiments will be omitted.

In S1800, the object detecting unit 906 determines whether or not a plurality of objects are detected from an image in S1201.

When the object detecting unit 906 determines in S1800 that the plurality of objects are detected from the image, the processing proceeds to S1801.

On the other hand, when the object detecting unit 906 determines in S1800 that the plurality of objects are not detected from the image (only one object is detected), the processing proceeds to S1203.

In S1801, the setting unit 901 determines whether or not as the setting related to the application method of the inference by the model for inference, a setting is made to collectively perform the inference on the detection results of the plurality of objects from the image.

When the setting unit 901 determines in S1801 that the setting is made to collectively perform the inference on the detection results of the plurality of objects from the image, the processing proceeds to S1803.

In S1803, the setting unit 901 sets up an ROI in a region covering the regions respectively corresponding to the plurality of detected objects, and the processing proceeds to S1804.

On the other hand, when the model decision unit 903 determines in S1801 that the setting is not made to collectively perform the inference on the detection results of the plurality of objects from the image, the processing proceeds to S 1802. In S1802, the setting unit 901 individually sets up the ROI for the region corresponding to each of the plurality of detected objects, and the processing proceeds to S1804.

In S1804, the setting unit 901 determines whether or not a setting is made related to the automatic initialization on the model for inference while the ROI on which the setup or update of is performed at a high frequency is set as a target.

When the setting unit 901 determines in S1804 that the setting is made related to the automatic initialization on the model for inference while the ROI on which the setup or update of is performed at a high frequency is set as a target, the processing proceeds to S1805.

On the other hand, when the setting unit 901 determines in S1804 that the setting is not made related to the automatic initialization on the model for inference while the ROI on which the setup or update of is performed at a high frequency is set as a target, the processing proceeds to S1205.

In S1805, the setting unit 901 determines whether or not the target ROI corresponds to the ROI on which the setup or update is performed at a frequency equal to or higher than a threshold within a predetermined time period.

When the setting unit 901 determines in S1805 that the target ROI corresponds to the ROI on which the setup or update is performed at a frequency equal to or higher than the threshold within the predetermined time period, the processing proceeds to S1806.

On the other hand, when the setting unit 901 determines in S1805 that the target ROI does not correspond to the ROI on which the setup or update is performed at a frequency equal to or higher than the threshold within the predetermined time period, the processing proceeds to S1205.

In S1806, the model decision unit 903 determines whether or not a difference between the size of the target ROI and the size of the input data of the model for inference (initialized model) is within a predetermined range.

When the model decision unit 903 determines in S1806 that the difference between the size of the target ROI and the input data of the size of the model for inference is within the predetermined range, the processing proceeds to S1205.

On the other hand, when the model decision unit 903 determines in S 1806 that the difference between the size of the target ROI and the input data of the size of the model for inference is not within the predetermined range, the processing proceeds to S1807.

In S1807, the model decision unit 903 newly initializes the model which can accept, as an input, the data of the size of the target ROI. In this case, in the processing in S813, the model for inference which is to be applied to the degradation restoration inference processing is switched to the model newly initialized in S1807.

As described above, in the image processing system according to the present embodiment, it is possible to adopt the control of automatically setting up the ROI such that the inference is collectively performed on the plurality of regions in the image as targets according to the designated setting. With the application of such control, the number of times to cause the inference to be executed can be reduced. In a case where no initialized model exists which matches the condition of the ROI on which the setup or update has been performed, it is also possible to adopt the control of automatically initializing the new model according to the condition. In particular, by adopting the control related to the above-described automatic initialization on the model while targeting the ROI with a relatively high frequency related to the setup or update, such an advantage can be expected that a speed of the processing related to the inference using the model for inference can be further increased.

Fifth Embodiment

As a fifth embodiment of the present disclosure, an example of a case will be described where when the setup or update of the ROI is performed, in a case where a size of the ROI is close to the size of the data which can be accepted by an initialized model as an input, the size of the ROI is adjusted in accordance with the model. It is noted that according to the present embodiment, a description will be provided while focusing on a part especially different from that of the above-described first to fourth embodiments, and a detailed description of a part substantially similar to that of the first to fourth embodiments will be omitted.

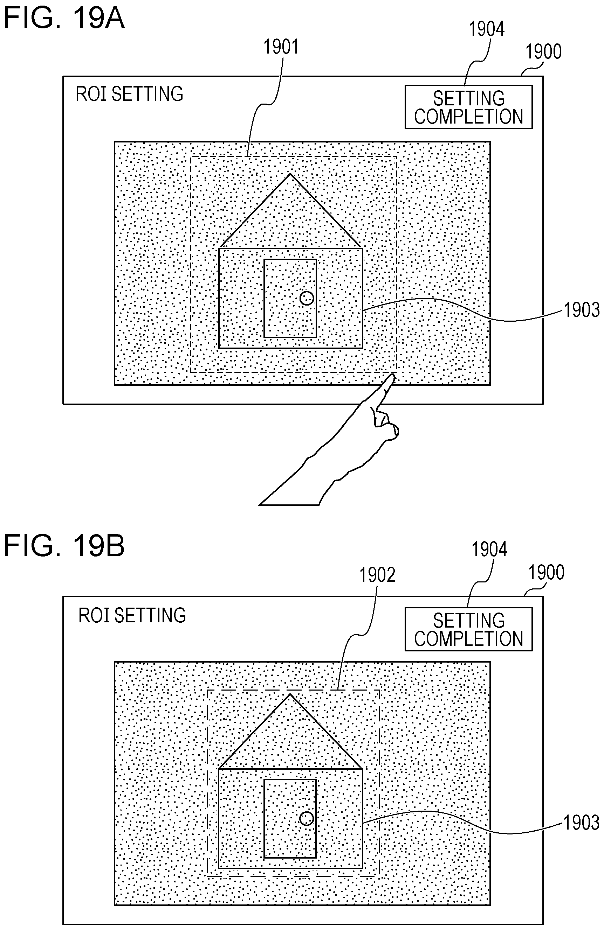

Figs. 19A and 19B illustrate an example of a screen for setting up an ROI in a target image.

A setting screen 1900 illustrated in Figs. 19A and 19B, for example, is presented to the user by being displayed on the display apparatus 40, and accepts an instruction from the user via the input apparatus 20 (for example, an instruction or the like related to the selection of the value). The setting of the ROI which is designated via the screen 1900 illustrated in Figs. 19A and 19B is used for the degradation restoration inference processing by the degradation restoration unit 115 for inference or the processing related to the decision of the model to be the setup target by the model decision unit 113.

Fig. 19A schematically illustrates a state in which an ROI is specified in the target image by the user via the screen 1900. Specifically, in the example illustrated in Fig. 19A, an input from the user is accepted via the touch panel, and an ROI 1901 is designated so as to include an object 1903 (house) captured as a subject in the image.

Fig. 19B schematically illustrates a state in which a size of the ROI 1901 which is designated in Fig. 19A is automatically adjusted in accordance with a size of the input data of the initialized model. Specifically, a setting unit 121 determines whether or not an initialized model exists in which a difference in the size of the input data is within a predetermined range from the size of the ROI 1901 in terms of the width and the height. Based on this, when the initialized model exists in which the difference in the size of the input data is within the predetermined range from the size of the ROI 1901 in terms of the width and the height, the setting unit 121 adjusts the size of the ROI 1901 in accordance with the size of the input data of the model. A ROI 1902 illustrated in Fig. 19B represents an ROI after the size adjustment.

In the example illustrated in Fig. 19B, the size of the ROI 1902 is adjusted so as to be smaller than that of the ROI 1901 before the size adjustment. With the application of such control, since the size of the region subjected to the inference is further decreased, such an advantage can be expected that the processing speed related to the inference is further improved.

A button 1904 is an input interface configured to accept, from the user, an instruction related to reflection of the setting of the ROI designated via the screen 1900. For example, in a case where the setting of the ROI on which the automatic adjustment has been performed as illustrated in Fig. 19B is accepted, the setting may be reflected by the user pressing the button 1904.

When the operation from the user is performed again on the ROI on which the automatic adjustment has been performed, the ROI may be updated or set up again. In addition, at this time, in a case where the ROI is updated or set up again within a predetermined time period since the automatic adjustment of the ROI, the automatic readjustment of the ROI may be inhibited. With the application of such control, in a case where the user adjusts the size of the ROI with intention, a situation can be avoided in which an adjustment result of the ROI is overwritten by the automatic adjustment of the ROI.

A value designated via the setting screen 1900 is saved in the setting saving unit 120.

With this configuration, by accessing the setting saving unit 120, the model decision unit 113 can refer to the above-described value saved in the setting saving unit 120.

It is noted that in the example illustrated in Figs. 19A and 19B, an example of the case has been described where the input of the setting is performed by using the display apparatus 40 and the input apparatus 20, but the input of the setting may be performed according to other methods. As a specific example, the input of the setting to the edge device 100 may be performed based on the information transmitted via the network to which the network I/F 106 is connected.

Processing

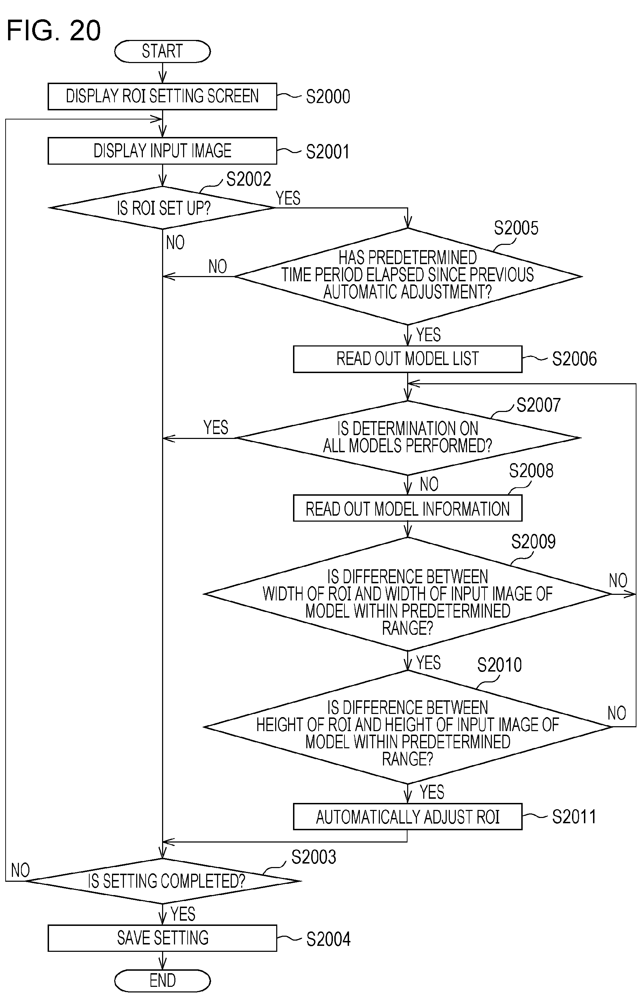

With reference to Fig. 20, an example of the processing by the image processing system according to the present embodiment will be described while particularly focusing on the processing in a case where the setup of the ROI is performed by an operation via the edge device 900. It is noted that in the example illustrated in Fig. 20, a description will be provided while focusing on a part especially different from that of the first to fourth embodiments, and a detailed description of a part substantially similar to that of the first to fourth embodiments will be omitted.

In S2000, the setting unit 121 displays a menu screen on the display apparatus 40. As exemplified with reference to Figs. 19A and 19B, the display region of the input image and the setting completion button 1904 are displayed on the menu screen.

In S2001, the setting unit 121 updates the image displayed in the display region of the input image with a latest input image.

In S2002, the setting unit 121 determines whether or not the setup of the ROI is performed.

When the setting unit 121 determines in S2002 that the setup of the ROI is not performed, the processing proceeds to S2003.

On the other hand, when the setting unit 121 determines in S2002 that the setup of the ROI is performed, the processing proceeds to S2005.

It is noted that, for example, as described with reference to Figs. 19A and 19B, the setup of the ROI is performed when the user designates the region in the input image displayed on the menu screen through an operation such as drag and drop via the touch panel. The setup method of the ROI described with reference to Figs. 19A and 19B is of course merely an example, and the method is not particularly limited as long as the ROI can be set up for the region in the target image.

In S2005, the setting unit 121 determines whether or not a predetermined time period has elapsed since the previous ROI automatic adjustment.

When the setting unit 121 determines in S2005 that the predetermined time period has not elapsed since the previous ROI automatic adjustment, the processing proceeds to S2003.

On the other hand, when the setting unit 121 determines in S2005 that the predetermined time period has elapsed since the previous ROI automatic adjustment, the processing proceeds to S2006.

In S2006, the setting unit 121 reads out information of the series of the initialized models serving as candidates for the model for inference to be caused to perform the degradation restoration inference.

In S2007, the setting unit 121 determines whether or not a series of determination processing which will be described as S2008 to S2010 has been executed on all the models the information of which has been read out in S2006.

When the setting unit 121 determines in S2007 that the series of determination processing has been executed on all the models, the processing proceeds to S2003.

On the other hand, when the setting unit 121 determines in S2007 that the series of determination processing has not been executed on all the models (that is, a model on which the determination processing is not executed remains), the processing proceeds to S2008.

In S2008, the setting unit 121 reads out information of a model that has not yet been subjected to the determination among the series of models the information of which has been read out in S2006.

In S2009, the setting unit 121 determines whether or not a difference between the width of the set ROI and the width of the input image of the model the information of which has been read out in S2008 is within a predetermined range.

When the setting unit 121 determines in S2009 that the difference between the width of the ROI and the width of the input image of the model is within the predetermined range, the processing proceeds to S2010.

On the other hand, when the setting unit 121 determines in S2009 that the difference between the width of the ROI and the width of the input image of the model is not within the predetermined range, the processing proceeds to S2007.

In S2010, the setting unit 121 determines whether or not a difference between the height of the set ROI and the height of the input image of the model the information of which has been read out in S2008 is within a predetermined range.

When the setting unit 121 determines in S2010 that the difference between the height of the ROI and the height of the input image is within the predetermined range, the processing proceeds to S2011.

On the other hand, when the setting unit 121 determines in S2010 that the difference between the height of the ROI and the height of the input image is not within the predetermined range, the processing proceeds to S2007.

In S2011, the setting unit 121 adjusts the width and the height of the set ROI in accordance with the width and the height of the model the information of which has been read out in S2008.

In S2003, the setting unit 121 determines whether or not a condition related to the completion of the setting of the ROI is met. As a specific example, in a case where the setting completion button 1904 is pressed on the screen 1900 exemplified in Figs. 19A and 19B, the setting unit 121 may determine that the condition related to the completion of the setting of the ROI is met.

When the setting unit 121 determines in S2003 that the condition related to the completion of the setting of the ROI is not met, the processing proceeds to S2001. In this case, the processing in S2001 and subsequent steps is executed again.

On the other hand, when the setting unit 121 determines in S2003 that the condition related to the completion of the setting of the ROI is met, the processing proceeds to S2004. In S2004, the setting unit 121 saves the setting of the ROI in the setting saving unit 120, and then ends the series of processing illustrated in Fig. 20.

As described above, in the image processing system according to the present embodiment, in a case where the size of the ROI is close to a size of data which can be accepted as an input by the initialized model, the size of the ROI is adjusted in in accordance with the model. With the application of such control, it becomes possible to automatically select the model to be more preferably used to execute the inference processing (for example, the model which can more promptly execute the inference) while targeting the region corresponding to the ROI set up in the image.

Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to embodiments, it is to be understood that the invention is not limited solely to the disclosed embodiments. The scope of the following claims is to be accorded the broadest interpretation so as to encompass all such modifications and equivalent structures and functions as understood by the skilled person.

The embodiments described above are not intended to solely limit the invention to the specific arrangement of features but rather provide implementations of one or more invention, especially the inventions defined by the scope of the appended claims. Although multiple features are described in the embodiments, all the multiple features are not necessarily required for the disclosure or invention(s) and the multiple features may be arbitrarily combined. Put another way, the embodiments described above can be implemented solely or as a combination of a plurality of elements or features thereof where necessary or where the combination of the elements or features from individual embodiments in a single embodiment is beneficial.

**Claims**

1. An information processing apparatus comprising:

   setting means (121, 901) for setting up, in an input image, an inference target region subjected to an inference by a model established based on machine learning; and
   decision means (113, 903) for deciding, according to a size of the inference target region set by the setting means, a model to be applied to an inference in which the input image is set as input data from among a plurality of models which have mutually different sizes of input data and on which an initialization for initiating a state in which the inference is executable on the input data is implemented.

2. The information processing apparatus according to Claim 1, wherein
   the decision means is configured to decide a model having a smaller size of the input data than others among a series of models having a size of the input data which is larger than the inference target region set by the setting means in the plurality of models as the model to be applied to the inference in which the input image is set as the input data.

3. The information processing apparatus according to Claim 1 or 2, further comprising:

switching means (114, 904) for switching, in a case where the size of the inference target region is changed, the model to be applied to the inference in which the input image is set as the input data to a model decided by the decision means according to the changed size of the inference target region.

4. The information processing apparatus according to Claim 3, wherein
in a case where a restriction on switching of the model is set out, even when the size of the inference target region is changed, the switching means is configured to restrict switching of the model to be applied to the inference in which the input image is set as the input data.

5. The information processing apparatus according to any one of Claims 1 to 4, wherein
the model is a model configured to implement, on an image set as a target, image processing of restoring a degradation which becomes apparent on the image.

6. The information processing apparatus according to any one of Claims 1 to 5, wherein
the plurality of models on which the initialization is implemented include a model of a recurrent configuration using a result of a previously executed inference as an input.

7. The information processing apparatus according to Claim 6, wherein
in a case where the model to be applied to the inference in which the input image is set as the input data is to be switched to the model of the recurrent configuration along with the change in the size of the inference target region, the inference is performed by a pre-switching model and the inference is performed by a post-switching model in parallel, and after the inference is performed a predetermined number of times by the post-switching model, switching of the model is performed.

8. The information processing apparatus according to Claim 7, wherein
according to a use state of a resource used for an inference, a frame rate of processing related to the inference is restricted upon switching of the model to be applied to the inference in which the input image is set as the input data during a period in which the inference is performed by the pre-switching model and the inference is performed by the post-switching model in parallel.

9. The information processing apparatus according to any one of Claims 6 to 8, wherein
in a case where the model to be applied to the inference in which the input image is set as the input data is switched to the model of the recurrent configuration along with the change in the size of the inference target region, the post-switching model uses, as an input, a result of an inference previously executed by the pre-switching model.

10. The information processing apparatus according to any one of Claims 1 to 9, wherein
the decision means is configured to decide, in a case where a plurality of inference target regions are set up by the setting means, the model to be applied to the inference in which the input image is set as the input data from among the plurality of models according to a size of a region covering the plurality of inference target regions.

11. The information processing apparatus according to any one of Claims 1 to 10, further comprising:

initialization means (115, 905) for newly initializing a model having a size of input data which is larger than a size of the inference target region set by the setting means,
wherein the decision means is configured to switch a method of deciding the model to be applied to the inference in which the input image is set as the input data according to a setting related to the method of deciding the model to either a method of deciding the model from among the plurality of models or a method of deciding the model by setting the newly initialized model as a target.

12. The information processing apparatus according to Claim 11, wherein
the initialization means is configured to newly initialize, in a case where a frequency of the setup of the inference target region is equal to or higher than a threshold and a difference between the size of the inference target region and an input data size of the model on which the initialization is implemented is out of a predetermined range, a model having a size of input data which is larger than a size of the inference target region in which the frequency of the setup is equal to or higher than the threshold.

13. The information processing apparatus according to any one of Claims 1 to 12, wherein
the setting means is configured to adjust, in a case where the set inference target region is changed and a difference between a size of the inference target region after the change and the input data size of the model on which the initialization is implemented is within a predetermined range, the size of the inference target region after the change to the input data size.

14. A method comprising:

setting up, in an input image, an inference target region subjected to an inference by a model established based on machine learning; and

deciding, according to a size of the set inference target region, a model to be applied to an inference in which the input image is set as input data from among a plurality of models which have mutually different sizes of input data and on which an initialization for initiating a state in which the inference is executable on the input data is implemented.

15. A computer program comprising instruction, which when executed by a computer, cause the computer to function as an information processing apparatus comprising:

setting means (121, 901) for setting up, in an input image, an inference target region subjected to an inference by a model established based on machine learning; and

decision means (113, 903) for deciding, according to a size of the inference target region set by the setting means, a model to be applied to an inference in which the input image is set as input data from among a plurality of models which have mutually different sizes of input data and on which an initialization for initiating a state in which the inference is executable on the input data is implemented.

# FIG. 1

CLOUD SERVER 200

201 — CPU

202 — ROM

203 — RAM

204 — LARGE CAPACITY STORAGE DEVICE

206

205 NETWORK I/F

INTERNET

EDGE DEVICE 100

101 CPU

102 RAM

103 ROM

104 LARGE CAPACITY STORAGE DEVICE

106 NETWORK I/F

107

105 GENERAL PURPOSE I/F

10 IMAGE CAPTURING APPARATUS

20 INPUT APPARATUS

30 EXTERNAL STORAGE DEVICE

40 DISPLAY APPARATUS

# FIG. 2

217

TRAINING
IMAGE GROUP

PHYSICAL
PROPERTY ANALYSIS
RESULT OF IMAGE
CAPTURING APPARATUS

PARAMETER
FOR LEARNING

218          219

200

CLOUD SERVER

211

DEGRADATION
APPENDING UNIT

212

LEARNING UNIT

214

DEGRADATION
RESTORATION
UNIT FOR
LEARNING

MODEL
UPDATE UNIT        216

ERROR
CALCULATION
UNIT               215

TRAINED MODEL ～ 220

100

EDGE DEVICE

116

INPUT IMAGE

MODEL
SAVING UNIT        119

121

SETTING
UNIT

112

INFERENCE UNIT

SETTING
SAVING UNIT

120

DEGRADATION
RESTORATION
UNIT FOR
INFERENCE

115

MODEL
CONTROL
UNIT

MODEL
DECISION
UNIT

118

OUTPUT IMAGE

114          113

FIG. 3A

INPUT IMAGE (116) → PREPROCESSING (301) → MODEL EXECUTION (302) → POSTPROCESSING (303) → OUTPUT IMAGE (118)

FIG. 3B

PAIR — TRAINING IMAGE GROUP / INPUT IMAGE GROUP

INPUT IMAGE (308) → PREPROCESSING (310) → MODEL EXECUTION (305) → RESTORATION RESULT (313)

MODEL UPDATE (315)

TRAINING IMAGE (309) → PREPROCESSING (311) → MODEL UPDATE / LOSS CALCULATION (314)

FIG. 4

# FIG. 5

FIG. 6

FIG. 7

MODEL FOR INFERENCE 708

MODEL FOR INFERENCE 707

MODEL FOR INFERENCE 706

# FIG. 8A

```
        ┌─────────────┐
        │    START    │
        └─────────────┘
               │
               ▼
    ┌─────────────────────┐
    │    OBTAIN MODEL     │───~S801
    └─────────────────────┘
               │
               ▼
    ┌─────────────────────┐
    │   INITIALIZE MODEL  │───~S802
    └─────────────────────┘
               │
               ▼             S803
          ╱─────────────╲
         ╱   WHETHER      ╲
        ╱ TO END INITIALIZATION ╲   NO
        ╲   PROCESSING?   ╱────────┐
         ╲───────────────╱          │
               │ YES                │
               ▼                    │
    ┌─────────────────────┐         │
    │ SET DEFAULT MODEL AS│───~S804  │
    │ MODEL FOR INFERENCE │         │
    └─────────────────────┘         │
               │                    │
               ▼                    │
        ┌─────────────┐             │
        │     END     │             │
        └─────────────┘             │
```

# FIG. 8B

START

OBTAIN INPUT IMAGE DATA —— S810

OBTAIN ROI SETTING —— S811

IS ROI CHANGED? —— S812
NO
YES

SWITCH MODEL —— S813

PREPARE INPUT DATA TO MODEL —— S814

EXECUTE INFERENCE —— S815

END

# FIG. 8C

```
         ( START MODEL SWITCHING )
                    │
                    ▼
      ┌──────────────────────────┐
      │   READ OUT MODEL LIST     │───── S820
      └──────────────────────────┘
                    │
                    ▼
              ╱────────────╲                 S821
             ╱   IS DETERMINATION ╲    YES
            ╱     ON ALL MODELS     ╲─────────────┐
            ╲     PERFORMED?        ╱              │
             ╲                     ╱               │
              ╲────────────╱                       │
                    │ NO                           │
                    ▼                              │
      ┌──────────────────────────┐                │
      │  READ OUT MODEL INFORMATION │── S822       │
      └──────────────────────────┘                │
                    │                              │
                    ▼              S823            │
              ╱────────────╲                       │
      NO     ╱   IS WIDTH OF    ╲                  │
   ◄────────╱ ROI EQUAL TO OR NARROWER ╲           │
            ╲ THAN WIDTH OF INPUT      ╱           │
             ╲  IMAGE OF MODEL?       ╱            │
              ╲────────────╱                       │
                    │ YES                          │
                    ▼              S824            │
              ╱────────────╲                       │
      NO     ╱   IS HEIGHT OF   ╲                  │
   ◄────────╱ ROI EQUAL TO OR SHORTER ╲            │
            ╲ THAN HEIGHT OF INPUT     ╱           │
             ╲  IMAGE OF MODEL?       ╱            │
              ╲────────────╱                       │
                    │ YES        S825         S826 │
                    ▼                              ▼
      ┌──────────────────────┐      ┌──────────────────────┐
      │   SELECT MODEL IN     │      │ SELECT DEFAULT MODEL  │
      │ DETERMINATION AS MODEL │      │ AS MODEL FOR INFERENCE │
      │    FOR INFERENCE      │      └──────────────────────┘
      └──────────────────────┘                  │
                    │◄────────────────────────────┘
                    ▼
         ( END MODEL SWITCHING )
```

# FIG. 9

# FIG. 10

1000

SETTING OF MODEL FOR INFERENCE

SETTING
COMPLETION

FIXING SIZE OF MODEL
FOR INFERENCE

FIX

# FIG. 11A

# FIG. 11B

# FIG. 12

```
                    START

                OBTAIN INPUT IMAGE DATA          S810

                    DETECT OBJECT                 S1201

                                        S1202
                 IS OBJECT DETECTED?              NO
                         |
                        YES
                              S1203                        S1204
      SET OBJECT DETECTED REGION AS ROI      SET UP ROI BY DEFAULT SETTING


                               S1205
                  IS ROI CHANGED?             NO
                         |
                        YES
                              S1206
                    IS SETTING OF
                 FIXING SIZE OF MODEL FOR       NO
                 INFERENCE VARIABLE?
                         |
                        YES
                    SWITCH MODEL              S813

                PREPARE INPUT DATA TO MODEL    S814

                 EXECUTE INFERENCE             S815

                       END
```

# FIG. 13

1301

PREVIOUS
RECURRENT
OUTPUT

1304

RECURRENT
OUTPUT

1303

INFERENCE

1302

INFERENCE
INPUT DATA

1305

INFERENCE
OUTPUT DATA

# FIG. 14

1400

SETTING OF MODEL FOR INFERENCE

SETTING COMPLETION

FIXING SIZE OF MODEL FOR INFERENCE

VARIABLE

RECURRENT INFORMATION DURING MODEL SWITCHING

TO REPURPOSE

# FIG. 15

```
          START
            │
            ▼
OBTAIN INPUT IMAGE DATA ──── S810
            │
            ▼
   OBTAIN ROI SETTING ──── S811
            │
            ▼                    S812
      IS ROI CHANGED? ────────── NO ──┐
            │                          │
           YES                         │
            ▼                          │
      SWITCH MODEL ──── S813           │
            │                          │
            ◄──────────────────────────┘
            ▼
PREPARE INPUT DATA TO MODEL ──── S1501
            │
            ▼
   EXECUTE INFERENCE ──── S1502
            │
            ▼
           END
```

## FIG. 16A

## FIG. 16B

# FIG. 17

1700

SETTING OF MODEL FOR INFERENCE

SETTING
COMPLETION

FIXING SIZE OF MODEL
FOR INFERENCE

VARIABLE

PERFORMING
COLLECTIVE INFERENCE
ON MULTIPLE REGIONS

COLLECTIVE

ADDING MODEL
FOR INFERENCE

AUTOMATIC
(HIGH FREQUENCY ROI)

# FIG. 18A

START

OBTAIN INPUT IMAGE DATA — S810

DETECT OBJECT — S1201

S1202

IS OBJECT DETECTED? — NO

YES

S1800

ARE MULTIPLE OBJECTS DETECTED? — NO

S1203

SET OBJECT DETECTED REGION AS ROI

S1204

SET UP ROI BY DEFAULT SETTING

YES

S1801

IS SETTING OF PERFORMING COLLECTIVE INFERENCE ON MULTIPLE OBJECTS "COLLECTIVE"?

NO

S1802

SET EACH REGION AS ROI

YES — S1803

SET REGION COVERING MULTIPLE REGIONS AS ROI

I

EP 4 517 653 A1

# FIG. 18B

**S1804** — IS SETTING OF ADDING MODEL FOR INFERENCE "AUTOMATIC (HIGH FREQUENCY ROI)"?

**S1805** — IS CURRENT ROI HIGH FREQUENCY SETUP OR UPDATE ROI?

**S1806** — IS DIFFERENCE BETWEEN SIZE OF CURRENT ROI AND SIZE OF INPUT DATA OF MODEL WITHIN PREDETERMINED RANGE?

**S1807** — INITIALIZE MODEL

**S1205** — IS ROI CHANGED?

**S1206** — IS SETTING OF FIXING SIZE OF MODEL FOR INFERENCE VARIABLE?

**S813** — SWITCH MODEL

**S814** — PREPARE INPUT DATA TO MODEL

**S815** — EXECUTE INFERENCE

END

43

## FIG. 19A

ROI SETTING

SETTING COMPLETION

1901

1904

1900

1903

## FIG. 19B

ROI SETTING

SETTING COMPLETION

1902

1904

1900

1903

# FIG. 20

START

DISPLAY ROI SETTING SCREEN —— S2000

DISPLAY INPUT IMAGE —— S2001

S2002
IS ROI SET UP? —— YES

NO

S2005
HAS PREDETERMINED TIME PERIOD ELAPSED SINCE PREVIOUS AUTOMATIC ADJUSTMENT? —— NO

YES

READ OUT MODEL LIST —— S2006

S2007
IS DETERMINATION ON ALL MODELS PERFORMED? —— YES

NO

READ OUT MODEL INFORMATION —— S2008

S2009
IS DIFFERENCE BETWEEN WIDTH OF ROI AND WIDTH OF INPUT IMAGE OF MODEL WITHIN PREDETERMINED RANGE? —— NO

YES

S2010
IS DIFFERENCE BETWEEN HEIGHT OF ROI AND HEIGHT OF INPUT IMAGE OF MODEL WITHIN PREDETERMINED RANGE? —— NO

YES

AUTOMATICALLY ADJUST ROI —— S2011

S2003
IS SETTING COMPLETED? —— NO

YES

SAVE SETTING —— S2004

END

Europäisches Patentamt

European Patent Office

Office européen des brevets

## EUROPEAN SEARCH REPORT

**Application Number**

EP 24 19 5952

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 113 409 204 A (OPPO GUANGDONG MOBILE TELECOMMUNICATIONS CO LTD) 17 September 2021 (2021-09-17) | 1-6, 10-15 | INV. G06T5/60 G06T5/70 |
| A | * the whole document * | 7-9 | |

TECHNICAL FIELDS SEARCHED (IPC)

G06T

The present search report has been drawn up for all claims

| Place of search | Date of completion of the search | Examiner |
|---|---|---|
| Munich | 16 January 2025 | Kollreider, Klaus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 24 19 5952

This annex lists the patent family members relating to the patent documents cited in the above-mentioned European search report.
The members are as contained in the European Patent Office EDP file on
The European Patent Office is in no way liable for these particulars which are merely given for the purpose of information.

16-01-2025

| Patent document cited in search report | Publication date | Patent family member(s) | Publication date |
|---|---|---|---|
| CN 113409204 A | 17-09-2021 | NONE | |

For more details about this annex : see Official Journal of the European Patent Office, No. 12/82

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021071757 A